# EUROPEAN PATENT SPECIFICATION

(11) **EP 3 454 566 B1**
(45) Date of publication and mention of the grant of the patent: **05.05.2021**
(21) Application number: 17190314.9
(22) Date of filing: 11.09.2017
(51) Int. Cl.: H04N 21/6587, H04N 21/845, H04N 21/81, H04N 21/218, H04N 21/2343, H04N 21/4728

(54) **STREAMING FRAMES OF SPATIAL ELEMENTS TO A CLIENT DEVICE**
STREAMING-RAHMEN RÄUMLICHER ELEMENTE FÜR EINE CLIENT-VORRICHTUNG
TRANSMISSION EN CONTINU DE TRAMES D'ÉLÉMENTS SPATIAUX À UN DISPOSITIF CLIENT

(43) Date of publication of application: 13.03.2019
(60) Divisional application: 21165519.6
(73) Proprietor: Tiledmedia B.V., 3061 BC Rotterdam (NL)
(72) Inventor: Van Brandenburg, Ray, 3061 BC Rotterdam (NL); Klok, Frederik Harm, 3061 BC Rotterdam (NL); Koenen, Robert Hendrik, 3061 BC Rotterdam (NL); Veenhuizen, Arjen Timotheus, 3061 BC Rotterdam (NL)
(74) Representative: De Vries & Metman

(56) References cited:
- WO-A1-2016/113458
- US-A1- 2010 036 964
- US-A1- 2016 119 657
- US-A1- 2017 111 670
- "Study of ISO/IEC DIS 23000-20 Omnidirectional Media Format", 119. MPEG MEETING;17-7-2017 - 21-7-2017; TORINO; (MOTION PICTURE EXPERT GROUP OR ISO/IEC JTC1/SC29/WG11),, no. N16950, 26 August 2017 (2017-08-26), XP030023613,
- TAGHAVINASRABADI AFSHIN ET AL: "Adaptive 360-degree video streaming using layered video coding", 2017 IEEE VIRTUAL REALITY (VR), IEEE, 18 March 2017 (2017-03-18), pages 347-348, XP033083975, DOI: 10.1109/VR.2017.7892319 [retrieved on 2017-04-04]
- DUANMU FANYI ET AL: "View direction and bandwidth adaptive 360 degree video streaming using a two-tier system", 2017 IEEE INTERNATIONAL SYMPOSIUM ON CIRCUITS AND SYSTEMS (ISCAS), IEEE, 28 May 2017 (2017-05-28), pages 1-4, XP033156178, DOI: 10.1109/ISCAS.2017.8050575 [retrieved on 2017-09-25]

## Description

### Field of the invention

The invention relates to methods of transmitting a request for video data.

The invention further relates to a client device for transmitting a request for video data.

The invention also relates to a computer program to perform such methods.

### Background of the invention

The increasing availability and use of Virtual Reality headsets has given rise to cameras that support new video formats, such as those that can record full 360-degree spherical video (often referred to as VR360 or 360VR video). Content recorded by such cameras is not only consumed in VR headsets, but is also made available on regular displays, where users can use their fingers, gestures or their mouse to navigate in the video.

Collectively referred to as 'immersive' video, there exists a wide variety of such new video formats, with more variants reaching the market every day. Some of these are cylindrical versus spherical in nature. Others record in 180 or 270 degree instead of the full 360. There are several different approaches to 3D, with some cameras being monoscopic, others stereoscopic and even others being partially stereoscopic (with only a certain area of the video being recorded stereoscopically, with the rest recorded monoscopically).

Regardless of the exact format, what binds these different content formats together is the fact that a user typically only views a small area of the video at any given time. With a significant percentage of immersive video being viewed through VR headsets, where the display is very close to the human eye, the resolution of the recorded video needs to be very high in order to not come across as pixelated (and thus low quality) to the end user. This poor quality seriously impedes the end-user quality of experience.

For traditional video being displayed on a smartphone or tablet, HD resolutions (1920x1080 pixels) are considered to be sufficient for the user to not being able to notice individual pixels. Large TVs screens obviously need a higher resolution when viewed up close, which is the reason newer TVs typically support Ultra HD (3840x2160 pixels; also referred to as 4K, because it has roughly 4000 horizontal pixels) resolutions. Even higher resolutions are generally considered to be unnoticeable to end users.

The same cannot be said for VR headsets though. Due to the closeness of the human eye to the display in a VR headset, the pixel size needs to be much smaller for the user not to be able to discern them. Because of this, the resolution of VR displays, and thus the content being shown on them, needs to be of significantly higher quality (resolution). Research has suggested that a VR headset will need to display video at roughly 8k horizontal pixels per eye (making the total display resolution 8 times UHD, or 32 times HD) for the individual pixels to no longer be visible to the end user. And given that users only ever see a small part of a 360-degree video at the same time, this means that the total resolution being recorded will need to be in the order of 32000 pixels horizontally and 16000 vertically (32k x 16k), so two orders of magnitude higher than what most traditional video content is being recorded at today. While today's cameras are not able to record 32K video, 8K and 12K cameras are starting to become available.

The primary factor limiting immersive video quality however, is not so much the camera technology, but the distribution technology. Sending traditional UHD video, or even high-quality HD, over the current internet, is not only very complex and expensive, it is also limited to those countries and users that have a sufficiently fast internet connection. With immersive video requiring an even higher quality video, distribution of immersive media is a big challenge.

There currently exists a variety of distribution methods for delivering immersive video. The first and most-used at this moment is also the simplest one, which is simply delivering the immersive video to the client as if it were a normal traditional video. This means the full spherical video is being delivered to the client, decoded on the end-user device, and projected on the VR headset. The advantage of this method is that it re-uses existing technology and distribution methods, and that no new techniques are required. The downside is that it is either very expensive in terms of bandwidth (given that an immersive video will typically be of higher resolution than a traditional video), which will reduce reach and increase cost, or low in quality (if the quality is degraded to accommodate for lower bandwidth).

A second group of approaches, and one that is increasingly explored in the research community, is also referred to as 'viewport-adaptive streaming'. While there exist several different approaches for viewport-adaptive streaming, each with its own advantages and drawbacks, the most scalable and promising is called tiled streaming. Tiled streaming is described in US 2017/0155912 A1, for example. With tiled streaming, the original immersive video (whether it is cylindrical, spherical, or otherwise) is split up into individual spatial elements and each frame of the video is split up into individual spatial-element frames. Since the spatial-elements are rectangles, the spatial elements and/or the spatial-element frames are referred to as "tiles". Each spatial-element frame is then independently encoded in such a way that it can be successfully decoded on the client side without the client requiring access to the other spatial-element frames. By successively retrieving individual spatial-element frames based on the user's field of view, the client is able to only retrieve and decode the area of the video that the user is interested in. By only streaming the area of the immersive video that the user is interested in, the total bandwidth necessary to distribute the immersive video can be reduced significantly. This reduction in bandwidth can either be used to increase reach (meaning a higher percentage of users will have sufficient bandwidth to receive the streaming video) and reduce cost (less bits transferred), or to increase quality, or to achieve a combination of these goals. By only sending a small portion of the video at any given time, that region can be sent at a higher quality than would normally have been possible without increasing bandwidth.

A drawback of this approach is the time it takes for the client to retrieve the appropriate spatial-element frames from the network when the user turns his head. The end to end latency between the user turning his head and the spatial-element frames being fetched from the network and displayed in the headset, also referred to as the motion-to-photon latency, significantly impacts the Quality of Experience (QoE). Latencies as little as 100 milliseconds can already make for a lower user QoE.

Most tiled streaming approaches discussed in the state-of-the-art are based on, or are an extension of, HTTP Adaptive Streaming. For example, the publication "Study of ISO/IEC DIS 23000-20 Omnidirectional Media Format", Byeongdoo Choi et al., ISO/IEC JTC1/SC29/WG11 N16950, July 2017, Torino, Italy, discloses a media application format that enables omnidirectional media applications, focusing on 360-degree video and associated audio. This study specifies a list of projection methods that can be used for conversion of a spherical video into a two-dimensional rectangular vide, specifies how to store omnidirectional media and the associated metadata using the ISO base media file format and specifies how to encapsulate, signal and stream omnidirectional media in a media streaming system, e.g. dynamic adaptive streaming over HTTP (DASH).

With HTTP Adaptive Streaming, of which MPEG DASH and Apple HLS are the dominant examples, a video stream is cut up into temporal elements, called segments, each typically between 3 and 30 seconds long. When watching a video, a client sequentially fetches successive segments from the network via standard HTTP, buffers them, and feeds them to the video decoder. Where HTTP Adaptive Streaming gets its name from is that each segment can be made available in multiple different qualities/resolutions (called "representations"), with the client able to switch between the different qualities based on the available bandwidth. Switching quality (due to changing network link conditions) would typically happen at segment boundaries.

When applied to tiled streaming, each spatial element is typically represented as an independent video stream, where each spatial element is itself split up into multiple temporal segments of spatial-element frames. A common manifest file [e.g. DASH-SRD: ISO/IEC 23009-1:2014], or container format then contains pointers to the individual segments of spatial-element frames and describes their temporal and spatial relationship. From a client point of view, the client first downloads and parses the manifest file and then sets up multiple HTTP Adaptive Streaming sessions, one for each spatial element. Each session will consist of sequentially downloading successive segments. When a user turns his head, the HTTP Adaptive Streaming sessions for those spatial elements no longer in the field of view will be cancelled, and new ones will be started for the spatial elements that just entered the field of view.

While HTTP Adaptive Streaming is well suited for traditional video streaming, it is less suited for tiled streaming, primarily because of latency. When a user turns his head with a VR headset, the human vestibular system expects the view captured by the eyes to move along accordingly. When this doesn't happen, or doesn't happen fast enough, motion sickness occurs very quickly. Research has shown that this problem already occurs if the delay between head movement and the eyes registering the appropriate movement is more than 8-10ms. This means that spatial-element frames need to be retrieved very fast, or that some visual information is needed that is always present and that can be displayed in a way that is consistent with a user's head movement.Given that 8-10ms is an extremely short time for a system to respond to sensor data, fetch video data over the internet, decode that data and show it to the end-user, this is typically not achieved in HTTP Adaptive Streaming-based tiled streaming solutions. It is possible to work around this by 1) always downloading a field of view that is larger than that which is experienced by the end-user, thereby creating a sort of spatial buffer, and 2) always streaming a low-resolution fallback/base layer that can be shown while the system waits for the high-resolution tiles to arrive.

While this approach works, it has two significant drawbacks. First, creating a spatial buffer that contains data outside the field of view of the user goes directly against the entire idea of tiled streaming, which was to reduce required bandwidth by only downloading that part of the viewport which is necessary. In other words, it reduces the gains made by using a tiled streaming solution in the first place. Second, while a low-resolution fallback at least shows the user some visuals to reduce or eliminate motion-sickness by keeping the motion-to-photon latency at a minimum, watching a low-quality stream for a significant period of time (e.g. anything more than a 100ms or so) every time a user moves his head is not a particularly good quality of experience, especially because users tend to move their head frequently when consuming immersive video. In this situation, the motion-to-photon latency is sufficient, but the "motion-to-high-res" latency, i.e. the end to end latency between the user turning his head and the high-resolution spatial-element frames being fetched from the network and displayed in the headset, is often insufficient.

US 2010/036964 A1 discloses a multimedia provider that multicasts a main multimedia stream comprising a mixture of intra and inter frames and multicasts an associated auxiliary stream comprising intra frames. At least a portion of the intra frames in the auxiliary stream are generated based on same multimedia data as at least a portion of the inter frames of the main stream. The provider also transmits a stream information channel comprising information descriptive of time instances of intra frames in the main and auxiliary streams. This information allows a set top box to selectively connect, in connection with session set-up and channel switch, to the main or auxiliary stream to receive an intra frame with as a low delay as possible.

WO 2016/113458 A1 discloses a method that comprises: requesting, by a client, an independently coded first representation of a video content component from a server; receiving and playing a first set of data units (belonging to a first view) of the independently coded first representation; requesting a second set of data units of a second representation (belonging to a second view), said second set of data units being dependently coded on one or more requested or buffered data units of the first set; and requesting a third set of independently coded data units of a third representation (belonging to the second view as well). This allows viewpoint switching while keeping the bitrate of the transmitted video as low as possible.

US 2017/111670 A1 discloses a video server that comprises an input port configured to receive from a user terminal requests to deliver video segments in a target representation. The server comprises an output port configured to deliver the requested video segments to the user terminal. The video server is configured to cause one or more video transcoding capabilities to transcode at least a part of the video segment in at least one source representation in an Open GOP scheme into the requested target representation in a Closed GOP scheme when the requested target representation is different from a representation previously provided to the user terminal for the preceding segment in the sequence.

US 2016/0119657 A1 discloses a method of transmitting media content that provides for a significantly reduced chunk size. The method includes receiving one or more adaptive transport streams into a memory buffer at a HTTP streamer from a media preparation unit. The received transport streams include a plurality of switchable segments each comprising one or more delivery chunks, the switchable segments being marked with segment boundary points and the delivery chunks being marked with chunk boundary points. One or more of the delivery chunks are then transmitted from a requested switchable segment to a requesting client device until a terminating segment boundary point is reached, wherein each delivery chunk is independently decodable, and a client device can begin decoding and rendering received delivery chunks even when the HTTP streamer has not yet completely received the entire requested switchable segment from the media preparation unit.

### Summary of the invention

It is a first object of the invention to provide a method of transmitting a request for video data, which helps a client device receive high-resolution spatial-element frames fast enough to achieve a low motion-to-high-res latency.

It is a second object of the invention to provide a client device for transmitting a request for video data, which helps the client device receive high-resolution spatial-element frames fast enough to achieve a low motion-to-high-res latency.

The invention is set out in the appended set of claims; the further examples called embodiments in the description are illustrative examples, not embodiments claimed in the present application.

In a first aspect of the invention, the method of transmitting a request for video data comprises: a) for each spatial element of a video in a user's field of view for which a client device does not possess a current high-resolution spatial-element frame, said client device transmitting one or more requests for high-resolution spatial-element frames of said spatial element of said video to a distribution node, said video comprising a plurality of spatial elements and a plurality of spatial-element frames for each of said plurality of spatial elements, said plurality of spatial-element frames comprising both non-inter-coded, i.e. intra-coded, spatial-element frames and inter-coded spatial-element frames, said one or more requests identifying said spatial element and specifying a starting point corresponding to a current time and said one or more requests being for data comprising a temporal segment of high-resolution spatial-element frames starting at said starting point, the first high-resolution spatial-element frame of said temporal segment of high-resolution spatial-element frames not being inter coded, and b) for each of said spatial elements for which said one or more requests is transmitted, said client device receiving data relating to said spatial element of said video from said distribution node in response to said one or more requests, said data comprising a temporal segment of high-resolution spatial-element frames starting at said starting point, said high-resolution spatial-element frames of said temporal segment each comprising a plurality of video pixels, the first one or more high-resolution spatial-element frames of said temporal segment of high-resolution spatial-element frames not being inter coded. Said method may be performed by software running on a programmable device. This software may be provided as a computer program product. Only said inter-coded spatial-element frames are encoded with reference to one or more other spatial-element frames of said plurality of spatial-element frames.

A single request may specify one or more spatial elements. Thus, the invention allows, but does not require a separate request to be transmitted for each of the spatial elements. Preferably, a single request is for multiple spatial-element frames. Said starting point may be specified as a point in time, a temporal index value or a position in a file, for example. The non-inter-coded first one or more spatial-element frames of the temporal segment of spatial-element frames may originate from a group of spatial-element frames which comprises only non-inter-coded spatial-element frames or from a group of spatial-element frames which comprises inter-coded spatial-element frames as well as one or more non-inter-coded spatial-element frames. The distribution node may be an origin node or a cache node, for example. The spatial elements may be rectangular or some or all spatial elements may have a different shape, e.g. an ellipse shape.

A spatial-element frame is current if it should be displayed currently. If a spatial-element frame cannot be displayed currently, it should preferably be displayed within 8-10ms after a change in the user's field of view is requested in order to achieve a low motion-to-photon latency. A high-resolution spatial-element frame should preferably be displayed within 100ms in order to achieve a low motion-to-high-res latency. Since a frame is typically obsolete after 40 ms (25fps) or 33.33 ms (30fps), upscaled versions of low-resolution spatial-element frames from a fallback layer may be displayed if the requested one or more high-resolution spatial-element frames are not received before the next spatial-element frame needs to be displayed. If a client device does not possess the current high-resolution spatial-element frame for a spatial element and has not requested the current high-resolution spatial-element frame, the client device will normally not possess the high-resolution spatial-element frame immediately preceding the current high-resolution spatial-element frame for this spatial element. A high-resolution spatial-element frame has a higher resolution than a low-resolution spatial-element frame.

The inventors have recognized that a significant factor contributing to the high motion-to-high-res latency is the fact that often more high-resolution spatial-element frames are retrieved than necessary. The contribution of this factor to the latency increases with an increasing Group of Pictures (GoP) size. To prevent that more high-resolution spatial-element frames are transmitted to the client device than necessary, the client device should be able to specify a starting point in the request for high-resolution spatial-element frames of a certain spatial element and request that the first high-resolution spatial-element frame of the temporal segment(s) to be received has not been inter coded so that one or more preceding high-resolution spatial-element frames are not required for decoding the first high-resolution spatial-element frame. Non-inter-coded spatial-element frames are spatial-element frames which are not encoded temporally, but only spatially (i.e. intra-coded), e.g. I-frames. Inter-coded spatial-element frames are spatial-element frames which are encoded spatially as well as temporally, e.g. P-frames or B-frames. P-frames can comprise predicted macroblocks. B-frames can comprise predicted and bi-predicted macroblocks. The one or more requests should at least be transmitted for each spatial element in a user's field of view for which the client device does not possess a current high-resolution spatial-element frame in order to achieve a low motion-to-high-res latency.

Said starting point may be specified as a position in a file and said file may comprise two or more temporal segments of high-resolution spatial-element frames relating to at least partly overlapping time periods for a plurality of time periods, at least a first one of said two or more temporal segments of high-resolution spatial-element frames comprising inter-coded spatial-element frames and at least a second one of said two or more temporal segments of spatial-element frames comprising only non-inter-coded spatial-element frames, said two or more temporal segments being stored near each other in said file. By having the client device specify the starting position as a position in a file, e.g. in an HTTP byte-range request, most of the intelligence may be placed in the client device. This allows distribution nodes to process requests for more users with the same hardware. By organizing the file as specified above, the way Content Delivery Networks caches work can be exploited in order to increase the chances that the requested non-inter-coded spatial-element frame is cached, thereby decreasing the time it takes to retrieve this non-inter-coded spatial-element frame, and thus the motion-to-high-res latency, even further.

Large scale content distribution over the internet is generally carried out through Content Delivery Networks, or CDNs. A CDN architecture typically consists of a minimum of two layers, with the lowest layer consisting of CDN edge caches that are placed relatively close to end-users, and the highest layer consisting of the origin distribution node on which all content is stored and which is stored at a central location. Some, but not all, CDNs place one or more other layers between these two extremes to provide intermediate caching and reduce load on the origin.

The process of a client device retrieving data from a CDN is as follows: through a system of redirection, the initial request for data ends up at a CDN edge node close to the location of the client. The edge node checks whether the requested data is in its cache and, if so, responds with the data. If the data is not in the cache, the edge node contacts the next, higher layer in the CDN architecture for the data. Once the request arrives at a point where the data is available (with the origin being the final location), the data trickles back to the edge node which then forwards it back to the client.

From a latency point of view, the ideal situation is the CDN edge node already having cached the spatial-element frame required by the client. However, given the characteristics of tiled streaming (streaming of rectangular spatial-element frames), the chances of this happening will be relatively small compared to traditional video. There are several reasons for this: 1) given that each client device normally only receives spatial-element frames of those spatial elements of the video that the user is viewing, the CDN edge node will only have cached those spatial-element frames of those spatial elements in the video that any particular user in the edge nodes serving area has accessed recently. Depending on the length and popularity of the content, the chances of every spatial-element frame of every spatial element having been streamed during the cache's cache window will be very slim except for the most popular content. 2) given the large total aggregate size of the immersive video compared to traditional content, and the relatively low frequency with which specific spatial-element frames of specific spatial elements are accessed, the CDN edge's caching strategy is more likely to purge (some) less frequently used spatial-element frame data relatively soon from its cache.

This problem is worsened by the fact that non-inter-coded spatial-element frames (e.g. I-frames) on which no other spatial-element frame (e.g. B-frame or P-frame) depends will normally be accessed relatively infrequently, which means that the probability that the second one of the two or more temporal segments of spatial-element frames, comprising only non-inter-coded spatial-element frames, is cached is likely even lower. When data for a given request is not cached, the CDN edge node will first have to retrieve the data from the origin, or another higher layer entity, which will significantly impact the time it takes to retrieve the data, and therefore the motion-to-high-res latency. Since the probability that the second one of the two or more temporal segments of spatial-element frames is cached in the CDN edge node is low, there is a significant chance of that data having to come from a higher-layer CDN node, and therefore resulting in a higher motion-to-high-res latency.

By storing the two or more temporal segments near each other in the file, the way CDN caches work, and the way they handle HTTP byte range requests, can be exploited. An HTTP Byte Range Request can be of arbitrary size, from requesting a single byte to an open-ended request where transfer is started from a certain byte range offset up until the file or the connection ends. However, given that both these extremes pose challenges for the communication between a CDN edge node and the higher layer CDN nodes, a byte range request is typically transformed before it is passed up to a higher layer CDN node in case of a cache miss. Most CDNs do this by working with fixed size chunks between the different nodes, e.g. of 2000Kbyte (or 2Mbyte). This will be referred to as "CDN chunking behavior". For example, when a client requests bytes 200-850 and there is a cache miss, the CDN cache may request bytes 0-2000k from the origin, while only sending bytes 200-850 on to the client. Similarly, still assuming a 2Mbyte internal chunk size, when requesting bytes 1980k-2010k, the CDN edge node may request 0-4000k from the origin.

How near said two or more temporal segments should preferably be stored in said file depends on the configured CDN chunking behavior and the size of the temporal segments. The size of the temporal segments may also depend on the configured CDN chunking behavior. For example, when temporal segments of spatial-element frames relating to at least partly overlapping time periods are stored (and therefore transmitted) sequentially and two or three consecutive temporal segments fit into one chunk, this should already substantially increase the probability that a requested non-inter-coded spatial-element frame is cached.

Said method may further comprise determining said starting point by looking up a position in a file by using an index associated with said file, said position corresponding substantially to a current time and said index comprising a mapping from a point in time or a temporal index value to a position in said file. By having the client device specify the starting position as a position in a file, e.g. in an HTTP byte-range request, most of the intelligence may be placed in the client device. This allows distribution nodes, e.g. a streaming server, to process requests for more users with the same hardware. The index allows the client device to determine a starting position based on a point in time (e.g. hours, minutes, seconds and milliseconds elapsed after the start of the video) or a temporal index value (e.g. a counter of frames of the video that have been displayed).

Determining said starting point may comprise selecting one index from a plurality of indices associated with one or more files, said one or more files including said file, said plurality of indices each comprising a mapping from a point in time or a temporal index value to a position in said one or more files, and looking up said position in said one or more files by using said selected index, said position corresponding to a position of a non-inter-coded spatial-element frame in said one or more files. When the file comprises two or more temporal segments of high-resolution spatial-element frames relating to at least partly overlapping time periods for a plurality of time periods, as previously described, multiple indices are preferably used. The plurality of indices may be stored in the same index file, for example.

Said method may further comprise, for at least one of said spatial elements for which said one or more requests is transmitted, said client device transmitting one or more further requests for further high-resolution spatial-element frames of said spatial element of said video to said distribution node, said one or more further requests identifying said spatial element and specifying a further starting point corresponding substantially to a current time, and determining said further starting point by looking up a position in a file by using another one of said plurality of indices. In this way, an I-frame-only stream, i.e. a stream comprising only non-inter-coded frames, can be used for the (first) request and a main stream, i.e. a stream comprising both non-inter-coded and inter-coded frames, can be used for the further request(s).

The method may further comprise displaying said received high-resolution spatial-element frames, pausing display of said video upon receiving an instruction to pause display of said video, upon receiving said instruction, for each spatial element of said video outside said user's field of view for which a client device does not possess a current high-resolution spatial-element frame, said client device transmitting one or more further requests for high-resolution spatial-element frames of said spatial element, receiving further high-resolution spatial-element frames in response to said further requests, and displaying at least one of said received further high-resolution spatial-element frames upon receiving an instruction to change said user's field of view while said display of said video is being paused. This makes it possible for the user to change his field of view (e.g. in a 360-degree video) without deteriorating his experience with (many) low-resolution spatial-element frames.

The method may further comprise, for each spatial element of said video, said client device transmitting one or more further requests for low-resolution spatial-element frames of said spatial element of said video, receiving low-resolution spatial-element frames in response to said further requests, a) displaying a current low-resolution spatial-element frame for each spatial element in said user's field of view for which said client device does not possess a current high-resolution spatial-element frame (e.g. if the high-resolution spatial-element frame is not (yet) available), b) displaying a current high-resolution spatial-element frame for one or more spatial elements in said user's field of view for which said client device possesses said current high-resolution spatial-element frame (e.g. if a spatial element has been in the user's field of view for a while and no spatial-element frame has been delayed or lost), and c) displaying a current low-resolution spatial-element frame for one or more further spatial elements in said user's field of view for which said client device possesses a current high-resolution spatial-element frame (e.g. if a spatial element has been in the user's field of view for a while and a spatial-element frame has been delayed or lost).

Using a current low-resolution spatial-element frame instead of a current high-resolution spatial-element frame may not only be beneficial when the client device does not possess the current high-resolution spatial-element frame, but also when the client device does possess the current high-resolution spatial-element frame. For example, displaying the current low-resolution spatial-element frame instead of the current high-resolution spatial-element frame may be beneficial when the high-resolution spatial-element frame depends on another high-resolution spatial-element frame and the client device does not possess this other high-resolution spatial-element frame (e.g. because it has been delayed or lost), which would result in the current high-resolution spatial-element frame being decoded with artefacts.

The method may further comprise rewriting metadata in a bitstream comprising said temporal segment of high-resolution spatial-element frames, and (upscaled) low-resolution spatial-element frames if applicable, to make said bitstream valid. This prevents the decoder from not being able to handle the spatial-element frames. A bitstream is valid when it can be decoded without errors by the decoder.

In a second aspect of the invention, the method of transmitting video data comprises receiving a request to obtain a part of a file from a requestor, said request identifying said file and specifying a starting position, said file comprising a plurality of spatial-element frames of a spatial element of a compressed video, said compressed video comprising a plurality of spatial elements, locating said file in a memory, obtaining data from said file located in said memory starting at said specified starting position, said data comprising two or more temporal segments of spatial-element frames relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only non-inter-coded, i.e. intra-coded, spatial-element frames, said two or more temporal segments being located near each other in said data, and transmitting said data to said requestor. Said method may be performed by software running on a programmable device. This software may be provided as a computer program product. Only said inter-coded spatial-element frames are encoded with reference to one or more other spatial-element frames of said plurality of spatial-element frames.

Said request may further specify an ending position and said data may be obtained from said specified starting position until said specified ending position. This advantageously prevents that more data is transmitted than necessary, e.g. a further temporal segment comprising only non-inter-coded spatial-element frames that is not needed, and/or allows bandwidth usage to be controlled.

Said two or more temporal segments of spatial-element frames may be stored sequentially in said file. Sequentially storing the two or more temporal segments of spatial-element frames may be used to ensure that they are stored near each other.

Said first one of said two or more temporal segments of spatial-element frames may comprise, for example, at most one or two non-inter-coded spatial-element frames. By alternating each one or two regular Group of Pictures comprising an I-frame and several P-frames with a temporal segment comprising only I- frames, for example, the temporal segments will normally have an appropriate size to benefit from the afore-mentioned CDN chunking behaviour. Said two or more temporal segments of spatial-element frames may substantially correspond to the same uncompressed video data.

Said request may specify a further starting position and said method may further comprise obtaining further data from said file located in said memory starting at said specified further starting position, said further data comprising two or more further temporal segments of spatial-element frames relating to at least partly overlapping time periods, said spatial-element frames of said two or more further temporal segments each comprising a plurality of video pixels, at least a first one of said two or more further temporal segments of spatial-element frames comprising inter-coded spatial-element frames and at least a second one of said two or more further temporal segments of spatial-element frames comprising only non-inter-coded spatial-element frames, and transmitting said further data to said requestor. In this way, the requestor, e.g. the client device or the CDN edge node, may request a plurality of temporal segments corresponding to non-overlapping time periods at the same time, thereby reducing the number of requests. This is beneficial, because there is a cost involved with each request, both in time as well as in bytes (e.g. each request may carry several HTTP headers).

In a third aspect of the invention, the signal comprises two or more temporal segments of spatial-element frames relating to at least partly overlapping time periods, said two or more temporal segments belonging to a spatial element of a compressed video, said compressed video comprising a plurality of spatial elements, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only non-inter-coded, i.e. intra-coded, spatial-element frames, said two or more temporal segments being located near each other in said signal. Only said inter-coded spatial-element frames are encoded with reference to one or more other spatial-element frames of said plurality of spatial-element frames

In a fourth aspect of the invention, the client device comprises at least one transmitter, at least one receiver, and at least one processor configured to: a) for each spatial element of a video in a user's field of view for which said client device does not possess a current high-resolution spatial-element frame, use said at least one transmitter to transmit one or more requests for high-resolution spatial-element frames of said spatial element of said video to a distribution node, said video comprising a plurality of spatial elements and a plurality of spatial-element frames for each of said plurality of spatial elements, said plurality of spatial-element frames comprising both non-inter-coded, i.e. intra-coded, spatial-element frames and inter-coded spatial-element frames, said one or more requests identifying said spatial element and specifying a starting point corresponding to a current time and said one or more requests being for data comprising a temporal segment of high-resolution spatial-element frames starting at said starting point, the first high-resolution spatial-element frame of said temporal segment of high-resolution spatial-element frames not being inter coded, and b) for each of said spatial elements for which said one or more requests is transmitted, use said at least one receiver to receive data relating to said spatial element of said video from said distribution node in response to said one or more requests, said data comprising a temporal segment of high-resolution spatial-element frames starting at said starting point, said high-resolution spatial-element frames of said temporal segment each comprising a plurality of video pixels, the first one or more high-resolution spatial-element frames of said temporal segment of high-resolution spatial-element frames not being inter coded. Only said inter-coded spatial-element frames are encoded with reference to one or more other spatial-element frames of said plurality of spatial-element frames.

Said at least one processor is configured to determine said starting point before transmitting said one or more requests by looking up a position in a file by using an index associated with said file, said position corresponding to a current time and said index comprising a mapping from a point in time or a temporal index value to a position in said file

In a fifth aspect of the invention, the distribution node comprises at least one receiver, at least one transmitter, and at least one processor configured to use said at least one receiver to receive a request to obtain a part of a file from a requestor, said request identifying said file and specifying a starting position, said file comprising a plurality of spatial-element frames of a spatial element of a compressed video, said compressed video comprising a plurality of spatial elements, locate said file in a memory, obtain data from said file located in said memory starting at said specified starting position, said data comprising two or more temporal segments of spatial-element frames relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only non-inter-coded, i.e. intra-coded, spatial-element frames, said two or more temporal segments being located near each other in said data, and use said at least one transmitter to transmit said data to said requestor. Only said inter-coded spatial-element frames are encoded with reference to one or more other spatial-element frames of said plurality of spatial-element frames.

In a sixth aspect of the invention, the method of transmitting video data comprises receiving a request to start streaming spatial-element frames of a spatial element of a compressed video from a requestor, said compressed video comprising a plurality of spatial elements and said request identifying said spatial element and specifying a temporal starting point, obtaining data relating to said spatial element of said compressed video by obtaining a portion of a first temporal segment and obtaining a second temporal segment succeeding said first temporal segment, said first temporal segment comprising a certain spatial-element frame corresponding to said temporal starting point and said first temporal segment comprising only non-inter-coded spatial-element frames, said second temporal segment comprising a plurality of inter-coded spatial-element frames and said portion of said first temporal segment starting with said certain spatial-element frame, said spatial-element frames of said first and second temporal segments each comprising a plurality of video pixels, and transmitting said data to said requestor. Said method may be performed by software running on a programmable device. This software may be provided as a computer program product.

In case it is necessary or beneficial to place more intelligence in the distribution node, the distribution node may actively ensure that the first spatial-element frame transmitted to the requestor is a non-inter-coded spatial-element frame by obtaining non-inter-coded spatial-element frames from the first temporal segment, starting with a spatial-element frame at the temporal starting position. The first temporal segment may comprise non-inter-coded versions of the inter-coded spatial-element frames of the temporal segment preceding the second temporal segment, for example. Said temporal starting point may be specified as a point in time or a temporal index, for example.

Said first temporal segment and said second temporal segment may be stored in a single file in a memory and said file may comprise two or more temporal segments of spatial-element frames relating to at least partly overlapping time periods for a plurality of time periods, at least a first one of said two or more temporal segments of spatial-element frames comprising inter-coded spatial-element frames and at least a second one of said two or more temporal segments of spatial-element frames comprising only non-inter-coded spatial-element frames. The same file organization that increases the probability that a requested non-inter-coded spatial-element frame is cached, as previously described, may be used when more intelligence is placed in the distribution node, albeit without the benefit of increasing the probability that a requested non-inter-coded spatial-element frame is cached.

In a seventh aspect of the invention, the distribution node comprises at least one receiver, at least one transmitter, and at least one processor configured to use said at least one receiver to receive a request to start streaming spatial-element frames of a spatial element of a compressed video from a requestor, said compressed video comprising a plurality of spatial elements and said request identifying said spatial element and specifying a temporal starting point, obtain data relating to said spatial element of said compressed video by obtaining a portion of a first temporal segment and obtaining a second temporal segment succeeding said first temporal segment, said first temporal segment comprising a certain spatial-element frame corresponding to said temporal starting point and comprising only non-inter-coded spatial-element frames, said second temporal segment starting with a non-inter-coded spatial-element frame and comprising a plurality of inter-coded spatial-element frames and said portion of said first temporal segment starting with said certain spatial-element frame, said spatial-element frames of said first and second temporal segments each comprising a plurality of video pixels, and use said at least one transmitter to transmit said data to said requestor.

In an eighth aspect of the invention, the method of transmitting a request for video data comprises, for each spatial element of a video in a user's field of view, a client device transmitting one or more requests for high-resolution spatial-element frames of a spatial element of said video, said video comprising a plurality of spatial elements and a plurality of spatial-element frames for each of said plurality of spatial elements, receiving high-resolution spatial-element frames in response to said requests, displaying said received high-resolution spatial-element frames, pausing display of said video upon receiving an instruction to pause display of said video, upon receiving said instruction, for each spatial element of said video outside said user's field of view for which a client device does not possess a current high-resolution spatial-element frame, said client device transmitting one or more further requests for high-resolution spatial-element frames of said spatial element, receiving further high-resolution spatial-element frames in response to said further requests, and displaying one or more of said received further high-resolution spatial-element frames upon receiving an instruction to change said user's field of view while said display of said video is being paused.

This makes it possible for the user to change his field of view (e.g. in a 360-degree video) without deteriorating his experience with (many) low-resolution spatial-element frames. Said method may be performed by software running on a programmable device. This software may be provided as a computer program product. This eighth aspect of the invention may be used with or without using the first aspect of the invention. However, without using the first aspect of the invention, the client device may not be able to receive high-resolution spatial-element frames fast enough to achieve a low motion-to-high-res latency.

The method may further comprise rewriting metadata in a bitstream comprising said one or more of said received further high-resolution spatial-element frames, and (upscaled) low-resolution spatial-element frames if applicable, to make said bitstream valid. This prevents the decoder from not being able to handle the spatial-element frames.

The method may further comprise rewriting an index number of said one or more received further high-resolution spatial-element frames, and (upscaled) low-resolution spatial-element frames if applicable, in said metadata before passing said bitstream to a decoder. This prevents the decoder from not being able to handle the spatial-element frames due to them having an index number which is out of order, e.g. the same index number as a frame which has already been decoded. Said index number may comprise a Picture Order Count (POC) value, e.g. when the bitstream is AVC or HEVC compliant.

In a ninth aspect of the invention, the client device comprises at least one transmitter, at least one receiver, and at least one processor configured to, for each spatial element of a video in a user's field of view, use said at least one transmitter to transmit one or more requests for high-resolution spatial-element frames of a spatial element of said video, said video comprising a plurality of spatial elements and a plurality of spatial-element frames for each of said plurality of spatial elements, use said at least one receiver to receive high-resolution spatial-element frames in response to said requests, display said received high-resolution spatial-element frames, pause display of said video upon receiving an instruction to pause display of said video, upon receiving said instruction, for each spatial element of said video outside said user's field of view for which a client device does not possess a current high-resolution spatial-element frame, use said at least one transmitter to transmit one or more further requests for high-resolution spatial-element frames of said spatial element, use said at least one receiver to receive further high-resolution spatial-element frames in response to said further requests, and display at least one of said received further high-resolution spatial-element frames upon receiving an instruction to change said user's field of view while said display of said video is being paused

In a tenth aspect of the invention, the method of transmitting a request for video data comprises, for each spatial element of a video in a user's field of view, a client device transmitting one or more requests for high-resolution spatial-element frames of a spatial element of said video, said video comprising a plurality of spatial elements and a plurality of spatial-element frames for each of said plurality of spatial elements, said plurality of spatial-element frames comprising both non-inter-coded spatial-element frames and inter-coded spatial-element frames, receiving high-resolution spatial-element frames in response to said requests, for each spatial element of said video, said client device transmitting one or more further requests for low-resolution spatial-element frames of said spatial element of said video, receiving low-resolution spatial-element frames in response to said further requests, displaying a current low-resolution spatial-element frame for each spatial element in said user's field of view for which said client device does not possess a current high-resolution spatial-element frame, displaying a current high-resolution spatial-element frame for one or more spatial elements in said user's field of view for which said client device possesses said current high-resolution spatial-element frame, and displaying a current low-resolution spatial-element frame for one or more further spatial elements in said user's field of view for which said client device possesses a current high-resolution spatial-element frame.

Using a current low-resolution spatial-element frame instead of a current high-resolution spatial-element frame may not only be beneficial when the client device does not possess the current high-resolution spatial-element frame, but also when the client device does possess the current high-resolution spatial-element frame, e.g. when the high-resolution spatial-element frame depends on another spatial-element frame and the client devices does not possess this other spatial-element frame. Said method may be performed by software running on a programmable device. This software may be provided as a computer program product. This tenth aspect of the invention may be used with or without using the first aspect and/or eighth aspect of the invention. However, without using the first aspect of the invention, the client device may not be able to receive high-resolution spatial-element frames fast enough to achieve a low motion-to-high-res latency.

A current low-resolution spatial-element frame may be displayed for a further spatial element in said user's field of view for which said client device possesses a current high-resolution spatial-element frame if said current high-resolution spatial-element frame is inter-coded and said client device does not possess a previous non-inter-coded high-resolution spatial-element frame on which said current high-resolution spatial-element frame depends. When the client device does not possess this spatial-element frame, decoding said current high-resolution spatial-element frame will often result in a low quality decoded frame.

A current high-resolution spatial- element frame may be displayed for a further spatial element in said user's field of view for which said client device possesses said current high-resolution spatial-element frame if said current high-resolution spatial-element frame is inter-coded, said client device possesses a previous non-inter-coded high-resolution spatial-element frame on which said current high-resolution spatial-element frame depends and said client device does not possess one or multiple inter-coded high-resolution spatial-element frames on which said current high-resolution spatial-element frame depends. Decoding said current high-resolution spatial-element frame may still result in a higher quality decoded frame than decoding said current low-resolution spatial-element frame in this case.

A current low-resolution spatial-element frame may be displayed for a further spatial element in said user's field of view for which said client device possesses a current high-resolution spatial-element frame if decoding said current high-resolution spatial-element frame is assessed to result in a lower quality decoded frame than decoding said current low-resolution spatial-element frame. By actually assessing the current high-resolution spatial-element frame, the best spatial-element frame can be selected in most or all situations.

In an eleventh aspect of the invention, the client device comprises at least one transmitter, at least one receiver, and at least one processor configured to, for each spatial element of a video in a user's field of view, use said at least one transmitter to transmit one or more requests for high-resolution spatial-element frames of a spatial element of said video, said video comprising a plurality of spatial elements and a plurality of spatial-element frames for each of said plurality of spatial elements, said plurality of spatial-element frames comprising both non-inter-coded spatial-element frames and inter-coded spatial-element frames, use said at least one receiver to receive high-resolution spatial-element frames in response to said requests, for each spatial element of said video, use said at least one transmitter to transmit one or more further requests for low-resolution spatial-element frames of said spatial element of said video, use said at least one receiver to receive low-resolution spatial-element frames in response to said further requests, display a current low-resolution spatial-element frame for each spatial element in said user's field of view for which said client device does not possess a current high-resolution spatial-element frame, display a current high-resolution spatial-element frame for one or more spatial elements in said user's field of view for which said client device possesses said current high-resolution spatial-element frame, and display a current low-resolution spatial-element frame for one or more further spatial elements in said user's field of view for which said client device possesses a current high-resolution spatial-element frame.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations comprising: a) for each spatial element of a video in a user's field of view for which a client device does not possess a current high-resolution spatial-element frame, said client device transmitting one or more requests for high-resolution spatial-element frames of said spatial element of said video to a distribution node, said video comprising a plurality of spatial elements and a plurality of spatial-element frames for each of said plurality of spatial elements, said plurality of spatial-element frames comprising both non-inter-coded spatial-element frames and inter-coded spatial-element frames, said one or more requests identifying said spatial element and specifying a starting point corresponding substantially to a current time and said one or more requests being for data comprising a temporal segment of high-resolution spatial-element frames starting substantially at said starting point, the first high-resolution spatial-element frame of said temporal segment of high-resolution spatial-element frames not being inter coded, and b) for each of said spatial elements for which said one or more requests is transmitted, said client device receiving data relating to said spatial element of said video from said distribution node in response to said one or more requests, said data comprising a temporal segment of high-resolution spatial-element frames starting substantially at said starting point, said high-resolution spatial-element frames of said temporal segment each comprising a plurality of video pixels, the first one or more high-resolution spatial-element frames of said temporal segment of high-resolution spatial-element frames not being inter coded.

A non-transitory computer-readable storage medium stores at least a second software code portion, the second software code portion, when executed or processed by a computer, being configured to perform executable operations comprising: receiving a request to obtain a part of a file from a requestor, said request identifying said file and specifying a starting position, said file comprising a plurality of spatial-element frames of a spatial element of a compressed video, said compressed video comprising a plurality of spatial elements, locating said file in a memory, obtaining data from said file located in said memory starting at said specified starting position, said data comprising two or more temporal segments of spatial-element frames relating to at least partly overlapping time periods, said spatial-element frames of said two or more temporal segments each comprising a plurality of video pixels, at least a first one of said two or more temporal segments of spatial-element frames comprising inter-coded spatial-element frames and at least a second one of said two or more temporal segments of spatial-element frames comprising only non-inter-coded spatial-element frames, said two or more temporal segments being stored near each other in said file, and transmitting said data to said requestor.

A non-transitory computer-readable storage medium stores at least a third software code portion, the third software code portion, when executed or processed by a computer, being configured to perform executable operations comprising: receiving a request to start streaming spatial-element frames of a spatial element of a compressed video from a requestor, said compressed video comprising a plurality of spatial elements and said request identifying said spatial element and specifying a temporal starting point, obtaining data relating to said spatial element of said compressed video by obtaining a portion of a first temporal segment and obtaining a second temporal segment succeeding said first temporal segment, said first temporal segment comprising a certain spatial-element frame corresponding to said temporal starting point and said first temporal segment comprising only non-inter-coded spatial-element frames, said second temporal segment comprising a plurality of inter-coded spatial-element frames and said portion of said first temporal segment starting with said certain spatial-element frame, said spatial-element frames of said first and second temporal segments each comprising a plurality of video pixels, and transmitting said data to said requestor.

A non-transitory computer-readable storage medium stores at least a fourth software code portion, the fourth software code portion, when executed or processed by a computer, being configured to perform executable operations comprising: for each spatial element of a video in a user's field of view, a client device transmitting one or more requests for high-resolution spatial-element frames of a spatial element of said video, said video comprising a plurality of spatial elements and a plurality of spatial-element frames for each of said plurality of spatial elements, receiving high-resolution spatial-element frames in response to said requests, displaying said received high-resolution spatial-element frames, pausing display of said video upon receiving an instruction to pause display of said video, upon receiving said instruction, for each spatial element of said video outside said user's field of view for which a client device does not possess a current high-resolution spatial-element frame, said client device transmitting one or more further requests for high-resolution spatial-element frames of said spatial element, receiving further high-resolution spatial-element frames in response to said further requests, and displaying one or more of said received further high-resolution spatial-element frames upon receiving an instruction to change said user's field of view while said display of said video is being paused.

A non-transitory computer-readable storage medium stores at least a fifth software code portion, the fifth software code portion, when executed or processed by a computer, being configured to perform executable operations comprising: for each spatial element of a video in a user's field of view, a client device transmitting one or more requests for high-resolution spatial-element frames of a spatial element of said video, said video comprising a plurality of spatial elements and a plurality of spatial-element frames for each of said plurality of spatial elements, said plurality of spatial-element frames comprising both non-inter-coded spatial-element frames and inter-coded spatial-element frames, receiving high-resolution spatial-element frames in response to said requests, for each spatial element of said video, said client device transmitting one or more further requests for low-resolution spatial-element frames of said spatial element of said video, receiving low-resolution spatial-element frames in response to said further requests, displaying a current low-resolution spatial-element frame for each spatial element in said user's field of view for which said client device does not possess a current high-resolution spatial-element frame, displaying a current high-resolution spatial-element frame for one or more spatial elements in said user's field of view for which said client device possesses said current high-resolution spatial-element frame, and displaying a current low-resolution spatial-element frame for one or more further spatial elements in said user's field of view for which said client device possesses a current high-resolution spatial-element frame.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig. 1 is a block diagram of an embodiment of the client device of the invention
- Fig. 2 is a block diagram of a first embodiment of the distribution node of the invention;
- Fig. 3 is a block diagram of a second embodiment of the distribution node of the invention;
- Fig. 4 illustrates a tiled video streaming method in which no specific bytes of a file can be requested;
- Fig. 5 depicts a conventional structure of a video segment;
- Fig. 6 is a flow diagram of a first embodiment of the methods of the invention;
- Fig. 7 is a flow diagram of a second embodiment of the method carried out by the client device;
- Fig. 8 depicts a file comprising inter-coded spatial-element frames and a file comprising only non-inter-coded spatial-element frames;
- Fig.9 depicts indices for the files of Fig.8;
- Fig.10 illustrates the methods of Fig.6 being used with the files of Fig.8;
- Fig.11 shows an example of spatial-elements which are in view and the different frame types being obtained for these spatial-elements;
- Fig.12 depicts an example of a file structure in which segments comprising inter-coded spatial-element frames and segments comprising only non-inter-coded spatial-element frames are interleaved;
- Fig.13 illustrates how the file structure of Fig.12 makes use of the behavior of CDN cache nodes; and
- Fig. 14 is a flow diagram of steps carried out by the client device for pausing display of a video;
- Fig. 15 is a flow diagram of steps carried out by the client device for displaying spatial-element frames; and
- Fig. 16 is a block diagram of an exemplary data processing system for performing the methods of the invention.

Corresponding elements in the drawings are denoted by the same reference numeral.

### Detailed description of the Drawings

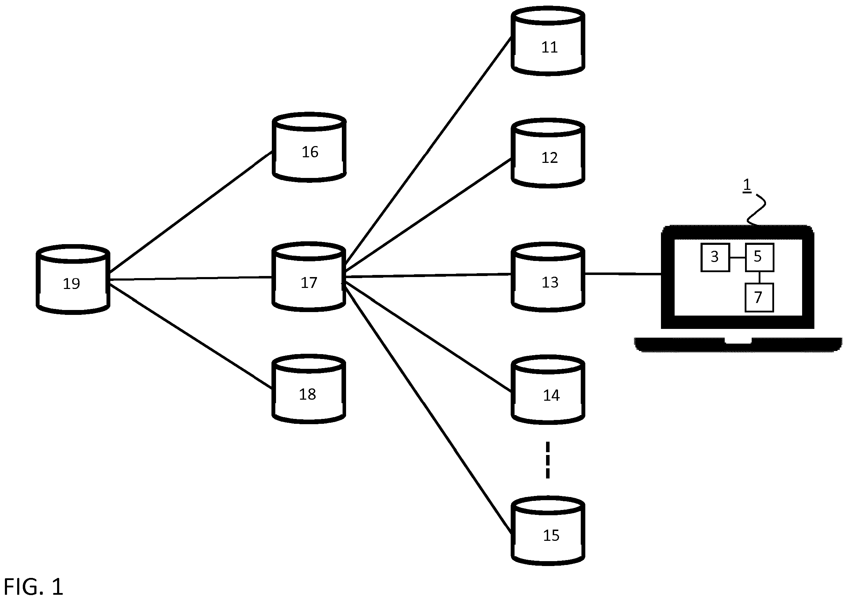

The client device **1** of the invention comprises a transceiver **3,** a processor **5** and a memory **7,** see **Fig. 1****.** The processor **5** is configured to use the transceiver **3** to transmit one or more requests for high-resolution spatial-element frames of the spatial element of the video to a distribution node for each spatial element of a video in a user's field of view for which the client device does not possess a current high-resolution spatial-element frame. The video comprises a plurality of spatial elements and a plurality of spatial-element frames for each of the plurality of spatial elements. The plurality of spatial-element frames comprises both non-inter-coded spatial-element frames (e.g. I-frames) and inter-coded spatial-element frames (e.g. B and P frames). The one or more requests identify the spatial element and specify a starting point corresponding substantially to a current time and the one or more requests are for data comprising a temporal segment of high-resolution spatial-element frames starting substantially at the starting point. The first high-resolution spatial-element frame of the temporal segment of high-resolution spatial-element frames is not inter coded.

In the embodiment of **Fig. 1****,** the client device **1** is connected to a content distribution network (CDN) and transmits the one or more requests addressed to the origin node **19.** The one or more requests arrive at the edge cache **13,** e.g. through redirection. The edge cache node **13** checks whether it can fulfill the one or more requests itself and transmits an own request for any spatial-element frames not in its cache to higher-layer cache node **17.** The higher-layer cache node **17** checks whether it can fulfill the one or more requests itself and transmits an own request for any spatial-element frames not in its cache to origin node **19.** The network shown in **Fig.1** comprises other distribution nodes than edge cache node **13,** higher-layer cache node **17** and origin node **19.** Edge cache nodes **11-12** and **14-15** and higher-layer cache nodes **16** and **17** are present, but are not in the path between client device **1** and origin node **19.** In an alternative embodiment, the client device **1** is used in a network or network path without cache nodes. The edge cache nodes **11-14** may be the edge cache nodes for Ireland, Germany, France and Spain, for example. The higher-layer cache nodes **16-18** may be the higher-layer cache nodes for the U.S., Europe and Asia regions, for example.

The processor **5** is further configured to use the transceiver **3** to receive data relating to a spatial element of the video from the distribution node in response to the one or more requests for each of the spatial elements for which the one or more requests is transmitted. The data comprises a temporal segment of high-resolution spatial-element frames starting substantially at the starting point. The high-resolution spatial-element frames of the temporal segment each comprise a plurality of video pixels. The first one or more high-resolution spatial-element frames of the temporal segment of high-resolution spatial-element frames are not inter coded.

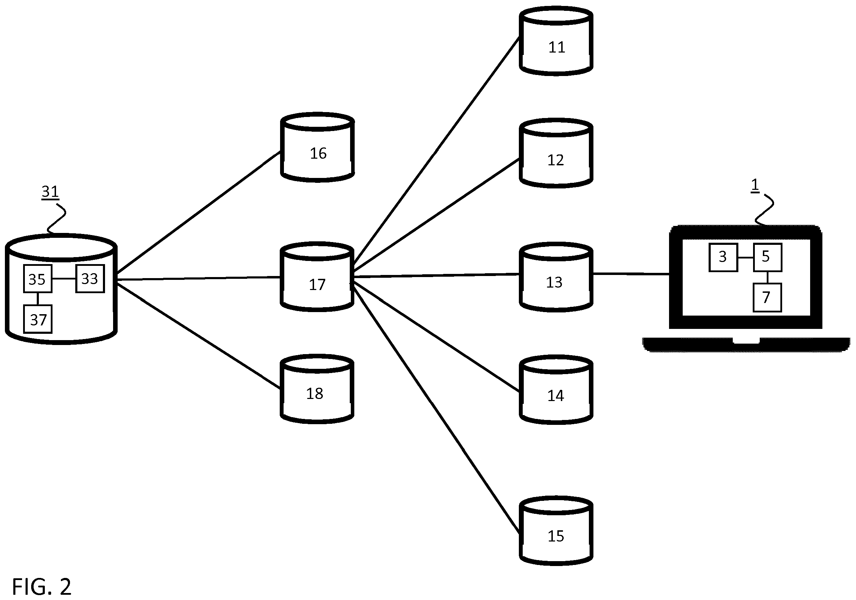

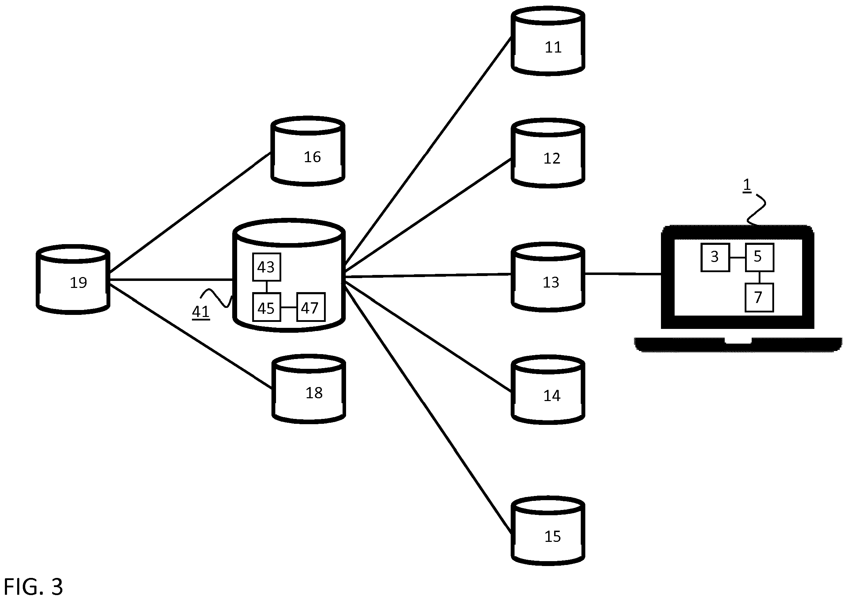

In the embodiment of **Fig. 1****,** conventional distribution nodes are used together with the client device of the invention. Alternatively, an origin node and/or a cache node which implement the invention may be used. **Fig. 2** shows the invention being implemented in the origin node **31.** The origin node **31** comprise a transceiver **33,** a processor **35** and a memory **37.** **Fig. 3** shows the invention being implemented in the (higher-level) cache node **41.** The (higher-level) cache node **41** comprises a transceiver **43,** a processor **45** and a memory **47.**

In a first embodiment of the origin node **31** and the cache node **41,** the processor **35** and the processor **45** are configured to use the transceiver **33** and the transceiver **43,** respectively, to receive a request to obtain a part of a file from the requestor (the higher-level cache node **17** and the edge cache node **13,** respectively). The request identifies the file and specifies a starting position. The file comprises a plurality of spatial-element frames of a spatial element of a compressed video. The compressed video comprises a plurality of spatial elements.

The processor **35** and the processor **45** are further configured to locate the file in the memory **37** and the memory **47,** respectively, and obtain data from the file located in the memory **37** and **47,** respectively, starting at the specified starting position. The data comprises two or more temporal segments of spatial-element frames relating to at least partly overlapping time periods. The spatial-element frames of the two or more temporal segments each comprise a plurality of video pixels. At least a first one of the two or more temporal segments of spatial-element frames comprise inter-coded spatial-element frames (e.g. P and B frames) and at least a second one of the two or more temporal segments of spatial-element frames comprising only non-inter-coded spatial-element frames (e.g. I frames). The two or more temporal segments are located near each other in the data. The processor **35** and the processor **45** are configured to use the transceiver **33** and the transceiver **43,** respectively, to transmit the data to the requestor (the higher-level cache node **17** and the edge cache node **13,** respectively).

In a second embodiment of the origin node **31** and the cache node **41,** the processor **35** and the processor **45** are configured to use the transceiver **33** and the transceiver **43,** respectively, to receive a request to start streaming spatial-element frames of a spatial element of a compressed video from a requestor, e.g. from the client device **1.** The compressed video comprises a plurality of spatial elements and the request identifies the spatial element and specifies a temporal starting point

In this second embodiment, the processor **35** and the processor **45** are further configured to obtain data relating to the spatial element of the compressed video by obtaining a portion of a first temporal segment and obtaining a second temporal segment succeeding the first temporal segment. The first temporal segment comprises a certain spatial-element frame corresponding to the temporal starting point and comprises only non-inter-coded spatial-element frames (e.g. I-frames). The second temporal segment starts with a non-inter-coded spatial-element frame and comprises a plurality of inter-coded spatial-element frames (e.g. P and B frames) and the portion of the first temporal segment starts with the certain spatial-element frame. The spatial-element frames of the first and second temporal segments each comprise a plurality of video pixels. The processor **35** and the processor **45** are configured to use the transceiver **33** and the transceiver **43,** respectively, to transmit the data to the requestor, e.g. to the client device **1.**

In an embodiment of the client device **1,** the processor **5** may be configured to display the received high-resolution spatial-element frames and pause display of the video upon receiving an instruction to pause display of the video. The processor **5** may be further configured to use the transceiver **3** to transmit one or more further requests for high-resolution spatial-element frames of a spatial element of the video for each spatial element of the video outside the user's field of view for which a client device does not possess a current high-resolution spatial-element frame upon receiving said instruction and to use the transceiver **3** to receive further high-resolution spatial-element frames in response to the further requests. The processor **5** may be further configured to display at least one of the received further high-resolution spatial-element frames upon receiving an instruction to change the user's field of view while the display of the video is being paused. The instruction to pause display of the video may be received as a result of the user pressing a button on his VR headset, for example. The instruction to change the user's field of view may be received as a result of the user moving his head while wearing his VR headset, for example.

In a variation on this embodiment, the processor **5** of the client device 1 does not specify a starting point in the one or more requests or request that the first spatial-element frame of the temporal segment of spatial-element frames is not inter coded. However, in this variation, the client device **1** may not be able to receive high-resolution spatial-element frames fast enough to achieve a low motion-to-high-res latency.

In the same or in another embodiment of the client device **1,** the processor **5** is configured to use the transceiver **3** to transmit one or more further requests for low-resolution spatial-element frames of a spatial element of the video for each spatial element of the video and use the transceiver **3** to receive low-resolution spatial-element frames in response to the further requests. These low-resolution spatial-element frames may form a so-called fall-back or base layer. The processor **5** is further configured to display a current low-resolution spatial-element frame for each spatial element in the user's field of view for which the client device does not possess a current high-resolution spatial-element frame, display a current high-resolution spatial-element frame for one or more spatial elements in the user's field of view for which the client device possesses the current high-resolution spatial-element frame, and display a current low-resolution spatial-element frame for one or more further spatial elements in the user's field of view for which the client device possesses a current high-resolution spatial-element frame.

In a variation on this embodiment, the processor **5** of the client device **1** does not specify a starting point in the one or more requests or request that the first spatial-element frame of the temporal segment of spatial-element frames is not inter coded. However, in this variation, the client device **1** may not be able to receive high-resolution spatial-element frames fast enough to achieve a low motion-to-high-res latency.

The client device **1** may be a PC, laptop, mobile phone, tablet, or a VR headset, for example. The client device **1** may be connected to a VR headset, for example. In the embodiment shown in **Fig.1****,** the client device **1** comprises one processor **5.** In an alternative embodiment, the client device **1** comprises multiple processors. The processor **5** of the client device **1** may be a general-purpose processor, e.g. an Intel or an AMD processor, or an application-specific processor, for example. The processor **5** may comprise multiple cores, for example. The processor **5** may run a Unix-based (e.g. Android), Windows or Apple operating system, for example.

In the embodiment shown in **Fig.1****,** a receiver and a transmitter are combined in the transceiver **3** of the client device **1.** In an alternative embodiment, the client device **1** comprises a receiver and a transmitter that are separate. The transceiver **3** of the client device **1** may use, for example, one or more wireless communication technologies such as Wi-Fi, Bluetooth, GPRS, CDMA, UMTS and/or LTE and/or one more wired communication technologies such as Ethernet to communicate with other devices on the network, e.g. the edge cache node **13.** There may be other devices in the path between the client device **1** and the origin node **19** that are not depicted in **Fig.1****,** e.g. access points, routers and switches. The memory **7** may comprise solid state memory, e.g. one or more Solid State Disks (SSDs) made out of Flash memory, or one or more hard disks, for example. The client device **1** may comprise other components typical for a client device, e.g. a power supply and/or battery and a display.

The origin node **31** may be a streaming server, for example. In the embodiment shown in **Fig.2****,** the origin node **31** comprises one processor **35.** In an alternative embodiment, the origin node **31** comprises multiple processors. The processor **35** of the origin node **31** may be a general-purpose processor, e.g. an Intel or an AMD processor, or an application-specific processor, for example. The processor **35** may comprise multiple cores, for example. The processor **35** may run a Unix-based or Windows operating system, for example.

In the embodiment shown in **Fig.2****,** a receiver and a transmitter are combined in the transceiver **33** of the origin node **31.** In an alternative embodiment, the origin node **31** comprises a receiver and a transmitter that are separate. The transceiver **33** of the origin node **31** may, for example, use one or more wired communication technologies such Ethernet to communicate with other devices on the Internet, e.g. the higher-layer cache nodes **16-18.** The memory **37** may comprise solid state memory, e.g. one or more Solid State Disks (SSDs) made out of Flash memory, or one or more hard disks, for example. The origin node **31** may comprise other components typical for an origin node, e.g. a power supply. In the embodiment shown in **Fig.2****,** the origin node **31** comprises one device. In an alternative embodiment, the origin node **31** comprise multiple devices.

In the embodiment shown in **Fig.3****,** the higher-layer cache node **41** comprises one processor **45.** In an alternative embodiment, the higher-layer cache node **41** comprises multiple processors. The processor **45** of the higher-layer cache node **41** may be a general-purpose processor, e.g. an Intel or an AMD processor, or an application-specific processor, for example. The processor **45** may comprise multiple cores, for example. The processor **45** may run a Unix-based or Windows operating system, for example.

In the embodiment shown in **Fig.3****,** a receiver and a transmitter are combined in the transceiver **45** of the higher-layer cache node **41.** In an alternative embodiment, the higher-layer cache node **41** comprises a receiver and a transmitter that are separate. The transceiver **47** of the higher-layer cache node **41** may, for example, use one or more wired communication technologies such Ethernet to communicate with other devices on the Internet, e.g. the edge cache node **13** and the origin node **19.** The memory **47** may comprise solid state memory, e.g. one or more Solid State Disks (SSDs) made out of Flash memory, or one or more hard disks, for example. The higher-layer cache node **41** may comprise other components typical for a node in a CDN network, e.g. a power supply. In the embodiment shown in **Fig.3****,** the higher-layer cache node **41** comprises one device. In an alternative embodiment, the higher-layer cache node **41** comprise multiple devices. The higher-layer cache node **41** may also have additional network functions, e.g. it may act as a router.

As previously described, a problem of using conventional HTTP Adaptive Streaming for delivering tiles is the way tiles are spatially and temporally segmented. If a user moves his head at Time T (during which Frame X is displayed to the user), the motion-to-high-res time of the tiled streaming system can be defined as the time it takes to display Frame Y which includes the high-resolutions versions of all the tiles of the new field of view. While there are various factors to that, such as the speed of the video decoder in the client, the depth of the framebuffer and the refresh rate of the VR headset, the most significant element that contributes to motion-to-high-res latency in tiled streaming systems is the time it takes to fetch the new tile data from the network.

The time it takes to complete any type of network request is determined by the following elements:
- The round-trip-time (RTT) to the server (origin node). In other words, the number of milliseconds between sending a negligible small request to the server, and receiving the first byte of the response.
- The size of the total request (in bytes)
- The size of the response (in bytes)
- The bandwidth of the connection between the server and the client

When this is applied to the motion-to-high-res problem, the size of the response can be more clearly defined as 'the size of the response up until the last byte of frame Y'.

Where the RTT and bandwidth can typically be considered fixed on a given connection, and outside the realm of control of the tiled streaming application, the size of the request and the response are in control of the client, and this is exactly where current HTTP Adaptive Streaming applications fail. HTTP Adaptive Streaming segments a video stream up into temporal segments, with each segment being stored as an individual file on the network. With each segment typically having a fixed duration, the size of the network response is determined by the size of the segment. While this is not a problem if the required Frame Y is at the immediate beginning of a segment, this becomes an issue when frame Y is anywhere else in the segment. In such cases, all the bytes of all the frames before Frame Y in the segment will have to be transported before Frame Y itself is retrieved, increasing motion-to-high-res latency significantly. This especially holds when the temporal segments are long, e.g. 10 or 30 seconds (which is common in industry at the moment).

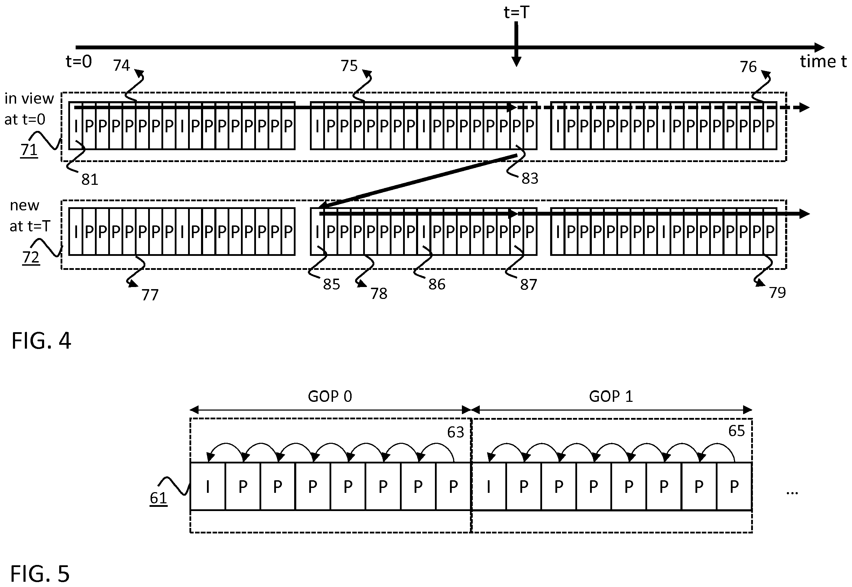

This is illustrated in **Fig. 4****.** A spatial element **71** is in the user's field of view at time t=0. At time t=T, a first temporal segment **74** and part of a second temporal segment **75** of spatial element **71** have been fetched and displayed when a new spatial element **72** comes into the user's field of view. Now, all the spatial-element frames of temporal segment **78** of spatial element **72** have to be retrieved before frame Y, i.e. spatial-element frame **87** of temporal segment **78,** itself is retrieved. Temporal segment **79** of spatial element **72** is retrieved thereafter. If spatial element **71** is still in view, despite the movement that causes spatial element **72** to come into view, temporal segment **76** of spatial element **71** is retrieved as well. Temporal segment **77** of spatial element **72** does not need to be retrieved. Each of the temporal segments **74-79** comprises two intra-coded frames (I) and 15 inter-coded frames (P).

To reduce this latency, the client device is configured to start retrieving frames at any position in the source file instead of cutting up the video into predetermined segments, only retrieving exactly those bytes that are necessary, and thereby not only reducing bandwidth requirements, but also reducing motion-to-high-res latency.

In order to allow for specific byte ranges to be requested, it may be necessary to adapt the file (container) format of the video is adapted. For example, one of the most used container formats for audio/video data is the ISO Base Media File Format (ISOBMFF) on which the MP4 specification is based. In this format, audio/video data is placed into ISOBMFF Boxes (or Atoms). While there exist a huge variety of boxes to describe all kinds of metadata and related information, and a typical ISOBMFF file will contain hundreds of these, the actual audio/video payload data is typically placed in 'mdat' boxes. In general, at least one GOP length of frames, but typically more, and even up to the full length of the content, is stored in a single 'mdat' box. As a result, if the client device can retrieve a single frame, this will not correspond to a full ISOBMFF box. The client device may therefore need to reconstruct a new ISOBMFF box around the retrieved data on the client side in order for it to be able to present the data to the decoder. An alternative solution would be to place each frame in its own ISOBMFF box during the packaging process, although this would mean the amount of ISOBMFF overhead will increase (given that each ISOBMFF box includes headers).

While the method described above allows a client device to have random access to any frame of every spatial element from a network point of view, the specifics of video or audio codec-specific constraints mean that the client device will not necessarily be able to decode all of those frames.

In a very simplified way, the way video compression typically works is by periodically encoding a reference frame, a so-called intra-coded picture (or I-frame), and for each subsequent frame only encoding the difference between that frame, the reference frame and any other frames up until one or more reference frames, which may be in the past or the future with respect to the frame that is required. This is shown in **Fig.5****.** A video **61** comprises a plurality of Groups of Pictures (GOPs), including a Group of Pictures **63** and a Group of Pictures **65.** Each Group of Pictures comprises one intra-coded picture and multiple inter-coded pictures. To decode such inter-encoded pictures (which can be P-frames or B-frames), the decoder requires access to the preceding or first-next I-frame, as well as one or more B- frames and/or P-frames.

For tiled streaming, this means that in order to decode frame Y, i.e. spatial element **87** of **Fig. 4****,** the decoder might need to have access to frames Y-1, Y-2 and Y-N (the intra-coded frame **86** of **Fig. 4** and the inter-coded frames between intra-coded frame **86** and frame Y) as well. Even if the number of frames on which frame Y depends is bounded by the so-called GOP-size (for Group of Pictures-size, the size of the group of all frames that depend on each other), each additional frame increases the size of the network request, and thereby the motion-to-high-res latency.

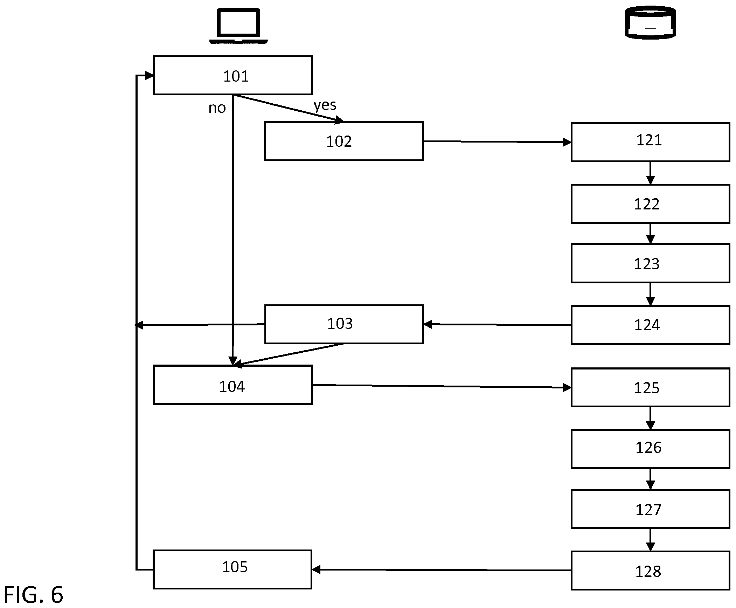

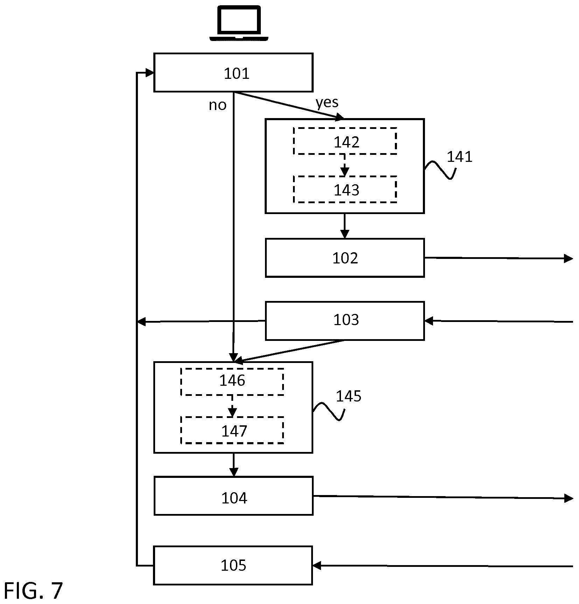

This latency can be reduced by encoding each spatial element at least twice: a main stream with a sufficiently large GOP size to increase maximum compression efficiency, and one I-frame-only stream (also known as intra-only) with a GOP size of 1, which means there are only I-frames and no P-frames, and thus no dependencies between frames. When a new spatial element comes into the user's field of view at a moment that doesn't immediately precede an I-frame, the client device may retrieve the I-frame-only stream up until the moment an I-frame is scheduled to arrive in the main stream, at which point it switches to the main stream (which may be a different representation of the spatial element). This way, the client device is able to start playback from any frame of every spatial element, at the cost of briefly having a somewhat higher bitrate (because the compression efficiency of the I-only stream will be lower). Thus, the method of transmitting a request for video data of the invention involves the client device requesting a non-inter-coded high-resolution spatial-element frame that it can display promptly, e.g. within 100ms, for each spatial element of a video in a user's field of view for which a client device does not possess a current high-resolution spatial-element frame. This is described in more detail in relation to **Figs. 6** and **7****.**

A first embodiment of methods of the invention are shown in **Fig. 6****.** A step **101** comprises the client device detecting whether the user's field of view has changed. If the user's field of view has not changed, step **104** is performed next. If the user's field of view has changed, step **102** is performed. Step **102** comprises the client device transmitting one or more requests for high-resolution spatial-element frames of the spatial element of the video to a distribution node for each spatial element of a video in a user's field of view for which a client device does not possess a current high-resolution spatial-element frame. The video comprises a plurality of spatial elements and a plurality of spatial-element frames for each of the plurality of spatial elements. The plurality of spatial-element frames comprises both non-inter-coded spatial-element frames and inter-coded spatial-element frames. The one or more requests identifies the spatial element and specifies a starting point corresponding substantially to a current time and the one or more requests being for data comprising a temporal segment of high-resolution spatial-element frames starting substantially at the starting point. The first high-resolution spatial-element frame of the temporal segment of high-resolution spatial-element frames is not inter coded. The spatial-element frames may be HEVC tiles, for example.

A step **121** comprises the distribution node receiving the one or more requests. The distribution node may be a cache node or origin node, for example. The starting point may be specified in the request as a point in time, a temporal index value or a position in a file. A step **122** comprises the distribution node locating the requested spatial-element frames of the video in a memory. A step **123** comprises the distribution node obtaining the requested spatial-element frames from the memory. A step **124** comprises transmitting the obtained spatial-element frames to the client device. If the distribution node is not able to locate the requested spatial-element frames in the memory, the distribution node may attempt to obtain the requested spatial-element frames from another distribution node, e.g. if the distribution node is a cache node. This is not depicted in **Fig. 6****.** This other distribution node may perform the same steps **121-124,** but the distribution node will typically request more spatial-element frames from the other distribution node than are requested from it by the client device.

Step **103** comprises the client device receiving the transmitted data from the distribution node in response to the one or more requests for each of the spatial elements for which the one or more requests is transmitted. The data comprises a temporal segment of high-resolution spatial-element frames starting substantially at the starting point. The high-resolution spatial-element frames of the temporal segment each comprise a plurality of video pixels. The first one or more high-resolution spatial-element frames of the temporal segment of spatial-element frames are not inter coded and the first high-resolution spatial-element frame will be obtained from the afore-mentioned I-frame-only stream in most cases. The temporal segment may further comprise inter-coded frames (e.g. P- frames and B-frames) from the afore-mentioned main stream. The non-inter-coded frame directly preceding the first inter-coded frame will typically be obtained from the main stream as well.

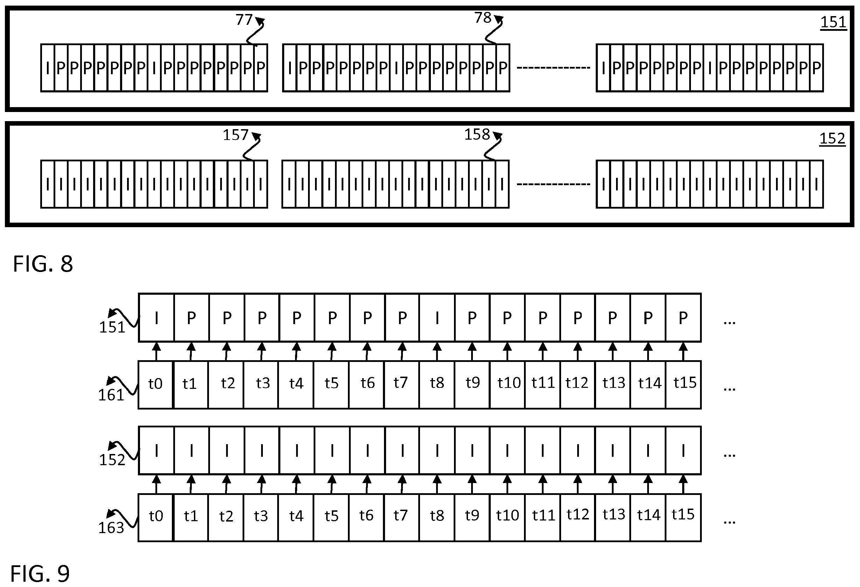

**Fig. 8** shows an example of a packaging of the I-only stream **152** and main stream **151** in two separate containers of a certain temporal length. Headers are not included in **Fig. 8** for clarity. Main stream **151** comprises the temporal segments **77** and **78** of **Fig. 4** and further temporal segments. I-only stream **152** comprises temporal segments **157** and **158** and further temporal segments.

Often, the current view and the previous view will have at least a few spatial elements in common. If so, step **104** is performed next. If not, step **101** is performed again. Step **104** comprises the client device transmitting one or more further requests for spatial-element frames of the spatial element of the video to the distribution node for spatial elements of a video in a user's field of view for which a client device already possesses a current spatial-element frame (because it received them in the current iteration or in a previous iteration of step **103** or in a previous iteration of step **105).** These spatial-element frames are therefore less urgent. The one or more further requests identify the spatial element and specify a further starting point corresponding substantially to a current time.

A step **125** comprises the distribution node receiving the one or more further requests. A step **126** comprises the distribution node locating the requested spatial-element frames of the video in a memory. A step **127** comprises the distribution node obtaining the requested spatial-element frames from the memory. A step **128** comprises transmitting the obtained spatial-element frames to the client device. If the distribution node is not able to locate the requested spatial-element frames in the memory, the distribution node may attempt to obtain the requested spatial-element frames from another distribution node, e.g. if the distribution node is a cache node. This is not depicted in **Fig. 6****.** This other distribution node may perform the same steps **125-128,** but the distribution node will typically request more spatial-element frames from the other distribution node than are requested from it by the client device.

Step **105** comprises the client device receiving the transmitted data from the distribution node in response to the one or more further requests. The received spatial-element frames have been obtained from the main stream. After step **105,** step **101** is performed again. The received data may be decoded and rendered in a further step between step **105** and step **101** (not shown) or by a method performed in parallel, for example.

It may be beneficial to modify the bitstream before passing it to de decoder to make the bitstream valid (again). Most codecs, e.g. HEVC, have some form of positioning information in each NAL header that allows the decoder to know where the particular slice belongs in a larger frame. This positioning information (in HEVC signaled in the 'slice_segment_address' field), is usually indicated by counting the number of coding tree blocks (or macroblocks) in raster scan order. In viewport-adaptive streaming however, when only a subset of a total panorama is streamed at any given time, the location of a spatial-element frame when presented to the decoder might not match its position in the original bitstream. For example, a spatial element that used to be in the top-left corner of the source panorama, might at some point be in the bottom-right corner of a user's field of view. In addition, a spatial-element that might be in the middle of a viewport at one moment might be at the top of the viewport a few frames later.

Because of this, it is inefficient and often impossible to have a strict relationship between the location of a spatial-element frame in the source panorama, its location in the decoded bitstream and its location in the renderer viewport. Downloaded spatial-element frames may therefore be arbitrarily assigned to positions in the decoded bitstream and the slice_segment_address in the slice header of each spatial-element frame should then be rewritten by the client before the NAL unit is presented to the decoder. When decoding is complete, and a new frame is outputted, the rendering step can make sure that the spatial-element frames are reshuffled to their intended position in the rendered viewport.

In a first embodiment of the method of transmitting the request, the starting point is specified as a position in a file. This embodiment is shown in **Fig. 7****.** A step **141** is performed before step **102.** Step **141** comprises determining the starting point by looking up a position in a file by using an index associated with the file. The position corresponds substantially to a current time and the index comprises a mapping from a point in time or a temporal index value to a position in the file.

For example, the spatial-element frames may be stored in a (containerized) format on a server along with an index file that allows accurate retrieval of only those data bytes belonging to a certain video frame. An embodiment of this mechanism is an index containing the byte ranges of all the frames in a certain file. After retrieving the index, the client can use HTTP Byte Range Requests for full random access to each frame (including but not limited to audio, video, subtitles and other sorts of metadata) stored on the server.

If the I-only and main streams are packaged in two separate containers, as shown in **Fig. 8****,** preferably two indices are used and step **141** comprises a sub step **142** of selecting one index from the plurality of indices associated with the two files. The two indices each comprise a mapping from a point in time or a temporal index value to a position in the two files. Step **141** then further comprises a sub step **143** of looking up the position in the two files by using the selected index. The position corresponds to a position of a non-inter-coded spatial-element frame in the one or more files. A step **145** is performed before step **104.** Step **145** comprises determining the further starting point (to be specified in the one or more further requests transmitted in step **104)** by looking up a position in a file in a sub step **147** by using another one of the plurality of indices, selected in a sub step **146.**

The main stream **151** and the I-only stream **152** of **Fig. 8** are shown in **Fig. 9** along with the associated indices. Index **161** is associated with main stream **151.** Index **163** is associated with I-only stream **152.** The indices comprise index data describing the byte offsets for each of the spatial-element frames of the streams. The point in time (t0,...t15,...tn) may be an elapsed time or elapsed frame count since the start of the video, for example.

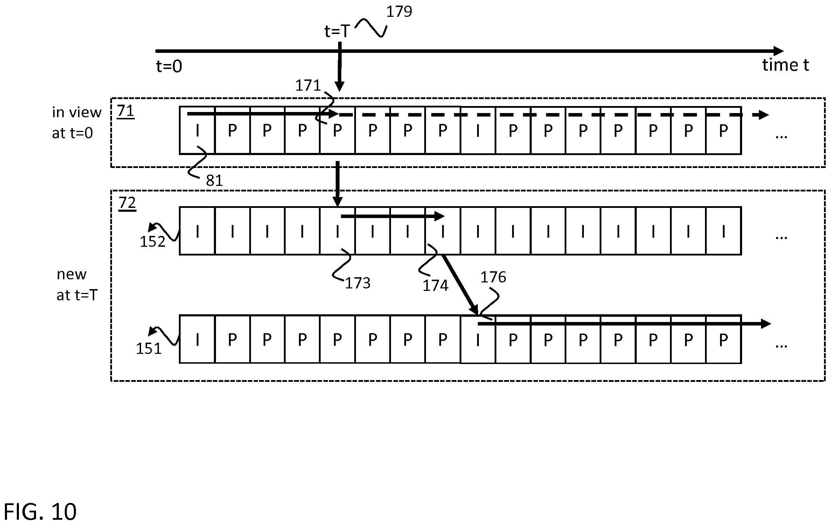

**Fig. 10** shows a spatial-element frame **171** of the spatial element **71** of **Fig. 4** being decoded when at time t=T, i.e. time **179,** a spatial element **72** comes into view. First, I-frame **173,** I-frame **174** and the I-frames between I-frame **173** and I-frame **174** of the intra-encoded stream **152** of spatial element **72** are decoded before switching to the main (IPP encoded) stream **151** of spatial element **72** and decoding I-frame **176.** If spatial element **71** is still in view, despite the movement that causes spatial element **72** to come into view, the spatial-element frames after spatial-element frame **171** are retrieved as well.

Since a frame is typically obsolete after 40ms (25fps) or 33.33ms (30fps), upscaled versions of low-resolution spatial-element frames from a fallback layer may be displayed if the requested one or more high-resolution spatial-element frames are not received before the next spatial-element frame needs to be displayed. The client device may be able to calculate an average round-trip-time and if this average round-trip-time is more than a frame duration (e.g. more than 40ms), not request a temporal segment starting with the current high-resolution spatial-element frame, but with the high-resolution spatial-element frame after the current high-resolution spatial-element frame. Which high-resolution spatial-element frame is requested as first frame may be determined based on the average round-trip-time, for example.

Variations of this mechanism can exist in which not two streams are used (I and IPP) per spatial element but many IPP streams per spatial element, staggered in time, and only one I-only stream per spatial element. Such variations could be used to reduce the time spent in the I-only stream by switching to the first IPP stream of which an I-frame can be displayed. This will reduce bandwidth spikes due to I-frame only streaming but requires more storage on the network and more encoding resources to create the content. Other ways to reduce the I-frame spike could be to stream reference frames (I-frames) at a fraction (e.g. half) of the framerate of the original stream and locally interpolate them in the temporal domain to match the original framerate. This will reduce the network stress but will also reduce the end user experience.

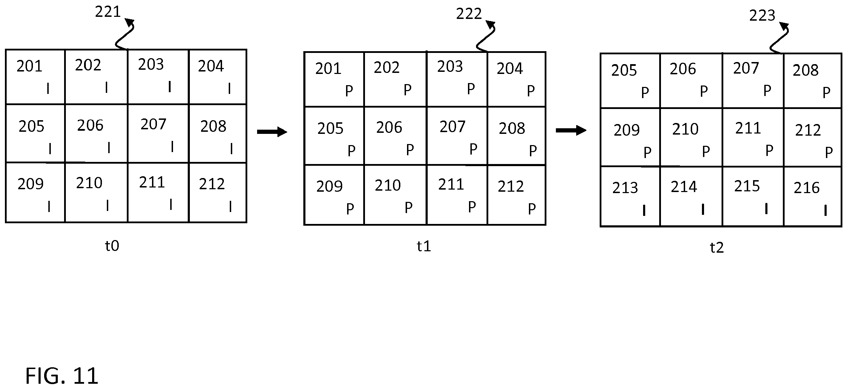

What happens when a user's field of view changes is further illustrated with the help of **Fig. 11****.** An initial view **221** is shown to the user at time t=t0. A view **222** is shown to the user at time t=t1. A view **223** is shown to the user at time t=t2. I-frames of spatial elements **201-212** are decoded in order to show initial view **221.** Since view **222** has the same spatial elements **201-212** as initial view **221,** P-frames of the spatial elements **201-212** can be fetched and decoded, as the client device possesses the necessary I-frames. The user changes his (field of) view between time t1 and time t2 by looking down. As a result, new spatial elements **213-216** come into view, i.e. are present in view **223.** To ensure that high-res frames can be displayed fast enough, I-frames are fetched and decoded for these spatial elements **213-216.** For the existing spatial elements **205-212,** P-frames can be fetched and decoded, as the client device possesses the necessary I-frames.

In a second embodiment of the method of transmitting the request, the starting point is specified as a point in time or a temporal index instead of as a position in a file. In this second embodiment, the client device does not need to use one or more indices, because the distribution node is more intelligent. In an embodiment of the method of transmitting the video data, step **123** of **Fig. 6** comprises obtaining data relating to the spatial element of the compressed video by obtaining a portion of a first temporal segment (from the I-only stream) and obtaining a second temporal segment (from the main stream) succeeding the first temporal segment. The first temporal segment comprises a certain spatial-element frame corresponding to the temporal starting point and the first temporal segment comprises only non-inter-coded spatial-element frames. The second temporal segment comprises a plurality of inter-coded spatial-element frames and the portion of the first temporal segment starts with the certain spatial-element frame. The spatial-element frames of the first and second temporal segments each comprise a plurality of video pixels.

As previously described, **Fig. 8** shows each video stream being packaged in two different containers of a certain temporal length. By instead packaging the main stream (containing both I-frames and P-frames) and the I only-stream in the same package, with a certain interleaving, both the frequency with which the main stream is accessed and the afore-mentioned CDN-internal chunking behavior can be exploited to increase the chances of the I-only-stream being cached in the CDN edge cache. In other words, the container comprises two or more temporal segments of spatial-element frames relating to at least partly overlapping time periods for a plurality of time periods, at least a first one of the two or more temporal segments of spatial-element frames comprises inter-coded spatial-element frames and at least a second one of the two or more temporal segments of spatial-element frames comprises only non-inter-coded spatial-element frames. The two or more temporal segments are stored near each other in the file, thereby resulting in the certain interleaving.

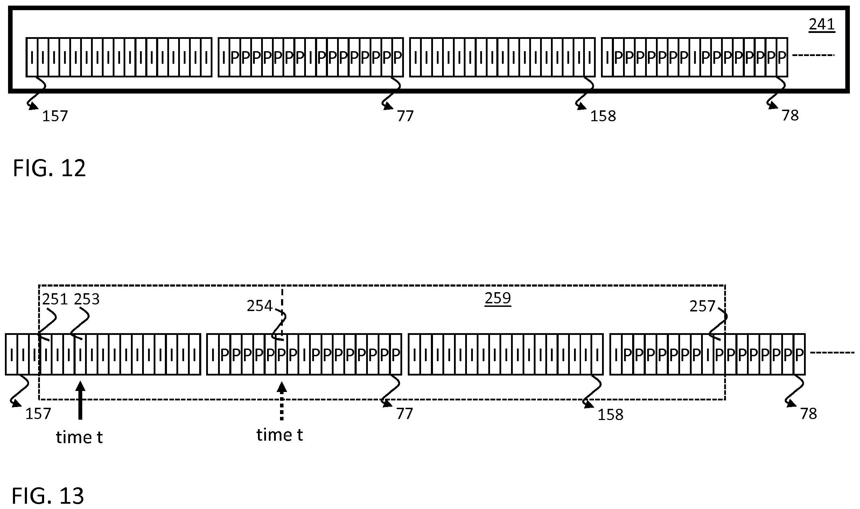

An example of such packaging is shown in **Fig. 12. Fig. 12** shows an enhanced packaging of the I-only and main (IPP) streams in a single container **241** of a certain temporal length. Temporal segments **157** and **158** are part of the I-only stream and temporal segments **77** and **78** are part of the main stream. Headers are not included in **Fig. 12** for clarity. Other options exist to structure this interleaved stream in a container while still exploiting the afore-mentioned CDN chunking behavior. This form of packaging not only improves the chances of the I-only-stream being cached, it also makes sure that whenever the I-only-stream is cached, the frames of the IPP stream that directly follow it will be cached as well, which is especially useful in cases where the client jumps in at one of the last frames of the GOP.

A third advantage of this form of packaging is the way in which it reduces the total number of independent HTTP Requests that have to be carried out. Normally, with the main stream and I-only stream being packaged independently, this would result in at least two separate HTTP requests. With the improved packaging, this is reduced to one single request. This not only reduces overhead and network traffic, it is also beneficial for prioritization purposes. If the client device sends both requests at the same time (not knowing whether either is cached or not), the frames being returned from the main stream will compete for bandwidth with the streams being requested from the I-only-stream, despite the latter frames being required earlier. In the new situation, since they are part of the same request, they will be returned sequentially and in-order, thereby further reducing the chances of a high motion-to-high-res latency.

**Fig. 13** shows a chunk **259** retrieved by a cache node. The chunk **259** comprises the temporal segments **77** and **158** and part of the temporal segments **157** and **78** of **Fig. 12** and thus a combination of I and IPP frames. The chunk **259** is retrieved by the cache node when the client device transmits a request specifying the position of P-frame **254** at time t as starting position and the cache node does not have the requested spatial-element frames in its (cache) memory. The chunk **259** comprises a part before the P-frame **254,** starting with I-frame **251,** and a part after the P-frame **254,** ending with P-frame **257.** The chunk **259** not only comprises the requested P-frame **254** at time t, but also the corresponding I-frame **253** at time t. Since frames from the main stream are requested more often than frames from the I-only stream, this results in a larger probability that frames from the I-only stream will be cache at the edge cache node. Headers are not included in **Fig. 13** for the sake of clarity.

This packaging can be applied to different file formats. For example, it may be implemented in a generic ISOBMFF container or in an MP4 container. In this case, the ISOBMFF/MP4 packager may be instructed that it should use a specific interleaving mechanism, and the different ISOBMFF boxes/atoms may be interleaved accordingly. As another example, an MPEG2-TS container may be used and the different streams may be multiplexed according to the chosen interleaving mechanism.

This packaging can be used in a further embodiment of the method of transmitting the video data. In this further embodiment, the data obtained in steps **123** and **127** of **Fig. 6** and transmitted in a signal in steps **124** and **128** (and/or in the equivalent steps performed by another distribution node, as described in relation to **Fig. 6****)** comprises two or more temporal segments of spatial-element frames relating to at least partly overlapping time periods. The spatial-element frames of the two or more temporal segments each comprise a plurality of video pixels. At least a first one of the two or more temporal segments of spatial-element frames comprises inter-coded spatial-element frames and at least a second one of the two or more temporal segments of spatial-element frames comprises only non-inter-coded spatial-element frames. The two or more temporal segments are located near each other in the data. The packaging of **Fig. 12** meets these requirements. If the request further specifies an ending position, step **123** comprises obtaining the data from the specified starting position until the specified ending position. This method may be performed by an edge cache node, higher-level cache node or origin node, for example.

As shown in **Fig. 12****,** the two or more temporal segments of spatial-element frames may substantially correspond to the same uncompressed video data, the two or more temporal segments of spatial-element frames may be stored sequentially in the file and the first one of the two or more temporal segments of spatial-element frames comprises, for example, at most one or two non-inter-coded spatial-element frames.

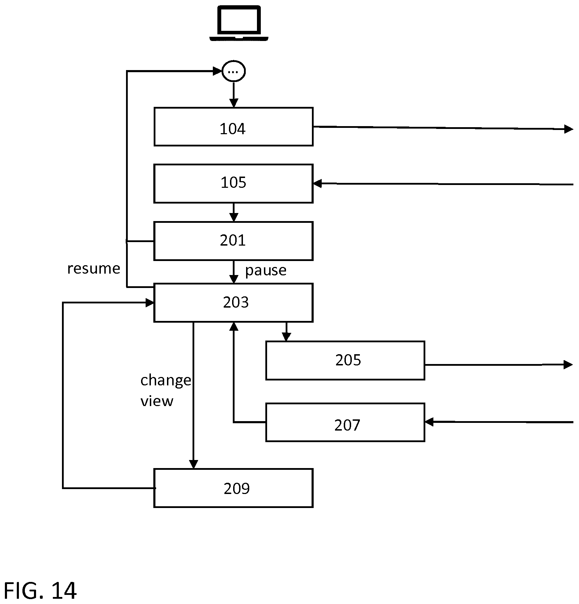

The embodiments of the methods shown in **Figs. 6-7** may be extended with the steps shown in **Fig. 14****.** With traditional video, pausing and resuming playback is as simple as temporarily halting the decoder and rendering process. After the user wants to resume playback, the decoder and renderer can simply resume from where they left off. If the same techniques are applied to viewport-adaptive streaming solutions such as the one described above, where only a part of the total video is retrieved and decoded at any point in time, this will result in the user only being able to see a small area of the total spherical video in high resolution while he is paused, i.e. the area which was in the viewport at the moment pause was selected. The rest of the video was not decoded and therefore cannot be viewed. This gives a very poor quality of experience.

What is needed to solve this problem is to provide a way to allow the user to look around the spherical video while paused that always shows the current viewport in the maximum possible quality/resolution. This is realized with steps **201-209.**

After step **105,** a step **201** is performed. Step **201** comprises displaying the high-resolution spatial-element frames received in steps **103** and **105.** Step **203** comprises pausing display of the video upon receiving an instruction to pause display of the video. This causes steps **205** and **207** to be performed. Step **205** comprises the client device transmitting one or more further requests for high-resolution spatial-element frames of a spatial element for each spatial element of the video outside the user's field of view for which a client device does not possess a current high-resolution spatial-element frame. Step **207** comprises the client device receiving further high-resolution spatial-element frames in response to the further requests.

Step **209** comprises displaying one or more of the received further high-resolution spatial-element frames upon receiving an instruction to change the user's field of view while the display of the video is being paused. In this embodiment, step **209** comprises rewriting metadata in a bitstream comprising the one or more of the received further high-resolution spatial-element frames, and (upscaled) low-resultion spatial-element frames if applicable, to make the bitstream valid. In particular, in this embodiment, step **209** comprises rewriting an index number, e.g. a Picture Order Count (POC) value, of the one or more of the received further high-resolution spatial-element frames in the metadata before passing the bitstream to a decoder. In this embodiment, step **209** further comprises rewriting the slice header of each spatial-element frame, as previously described.

In other words, in contrast to traditional video players, the decoded and rendered frame that is displayed to the end-user will need to be constantly updated while playback is paused. Given that a (hardware) decoder will typically not be able to decode the entire spherical video, this means that the decoder will need to be kept running while the video is paused, so that whenever the user moves his head, new spatial-element frames can be fed to the decoder that will then be decoded and rendered onto the sphere. This typically means that new spatial-element frames need to be retrieved from the network.

Furthermore, due to the way standardized codecs such as AVC and HEVC work, the same spatial-element frames (or spatial-element frames belonging to the same overall video frame) cannot simply be repeatedly fed to the decoder. In the header of each encoded frame of a video (and thus each spatial-element frame) is an index value, called a Picture Order Count (or POC) in some codecs, that is incremented for each sequential frame. This POC is used by the decoder to keep track of frame numbering and to reference individual frames in the bitstream whenever inter-frame prediction is used. If the same frame would be fed to the decoder two times in a row, the POC of successive frames would be the same and the bitstream fed to the decoder would be invalid, causing the decoder to reject the bitstream or even crash.

It is therefore beneficial to rewrite the POC field of individual spatial-element frames before feeding them into the decoder when the video is paused, causing the decoder to interpret the repeated frames as new frames and keeping the decoder running. Whenever playback is resumed, the POC rewriting process might need to continue in order to make sure there are no discontinuities in the POC numbering.

While the above solves the issue of keeping the decoder running, it is not always sufficient for making sure that a valid bitstream is presented to the decoder while paused. Depending on the specific codec used, rewriting the POC might not result in a valid bitstream if the frame that is repeated is not an I-frame. This is because the inter-frame references in a P-frame might be thrown off if the relative position of the frame in the GOP is changed by repeating a particular frame (causing the distance in frames to the previous I-frame to change). In such cases, it is necessary to either skip or wait to the next I-frame in the video, to go back to the previous I-frame, and then use that particular I-frame to repeatedly feed to the decoder or to retrieve an I-frame from an I-only stream as previously described (while applying the POC rewriting mechanism described above).

Alternatively, the steps shown in **Fig. 14** may be used to enhance conventional viewport-adaptive streaming methods.

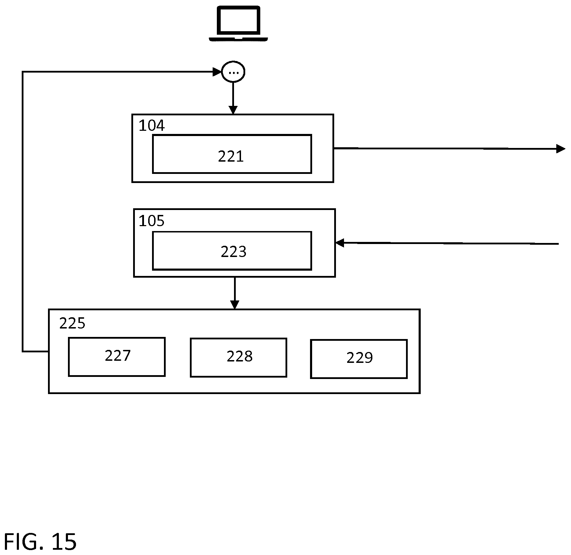

The embodiments of the methods shown in **Figs. 6-7** may be extended with the steps shown in **Fig. 15****.** The client device may experience a brief network interruption or slow down while retrieving spatial-element frames, causing the system to not have data (e.g. HEVC NAL data) available for a given spatial element when it is time to present the next frame to the decoder. In such a case, the system might decide to accept this data loss and proceed with the next frame instead of waiting for the data to arrive (which would cause an interruption in the playback). This will not only cause a problem when the current, missed spatial-element frame needs to be displayed, but possibly for quite a few spatial-element frames to come, given that future spatial-elements frames might have dependencies on the missed spatial-element frame (irrespective of whether the missed frame was a P or I frame) and cause these spatial-element frames to be 'damaged' after being decoded. The visual artefacts that result from this will degrade the quality of experience of the user. Especially if the missed spatial-element frame was an I-frame, the visual degradation might be quite severe. Steps **221-229** of **Fig.15** are intended to help to reduce this visual degradation.

Step **104** of **Figs. 6-7** comprises a step **222** and step **105** of **Figs. 6-7** comprises a step **223.** Step **221** comprises the client device transmitting one or more further requests for low-resolution spatial-element frames of the spatial element of the video for each spatial element of the video, e.g. a fallback layer. Step **223** comprises receiving low-resolution spatial-element frames in response to the further requests.

Step **225** is performed after step **105.** Step **225** comprises displaying the current spatial-element frames and comprises sub steps **227, 228** and **229.** Step **227** comprises displaying (an upscaled version of) a current low-resolution spatial-element frame for each spatial element in the user's field of view for which the client device does not possess a current high-resolution spatial-element frame. Step **228** comprises displaying a current high-resolution spatial-element frame for one or more spatial elements in the user's field of view for which the client device possesses the current high-resolution spatial-element frame. Step **229** comprises displaying (an upscaled version of) a current low-resolution spatial-element frame for one or more further spatial elements in the user's field of view for which the client device possesses a current high-resolution spatial-element frame.

In other words, the client device may decide to continue with decoding but replace a 'damaged' spatial-element frame with an upscaled spatial-element frame of the fallback layer to replace it during rendering. While the quality of the upscaled fallback spatial-element frame will be worse than the high-resolution spatial-element frames, it will often still be better than showing a 'damaged' spatial-element frame.

In the embodiment shown in **Fig. 15****,** a current low-resolution spatial- element frame is displayed in step **229** for a further spatial element if the current high-resolution spatial-element frame is inter-coded and the client device does not possess a previous non-inter-coded high-resolution spatial-element frame on which the current high-resolution spatial-element frame depends. In an alternative embodiment, a current low-resolution spatial-element frame is displayed in step **229** for a further spatial element if decoding the current high-resolution spatial-element frame is assessed to result in a lower quality decoded frame than decoding the current low-resolution spatial-element frame.

In the embodiment shown in **Fig. 15****,** a current high-resolution spatial-element frame is displayed in step **228** for a further spatial element if the current high-resolution spatial-element frame is inter-coded, the client device possesses a previous non-inter-coded high-resolution spatial-element frame on which the current high-resolution spatial-element frame depends and the client device does not possess one or multiple inter-coded high-resolution spatial-element frames on which the current high-resolution spatial-element frame depends. In an alternative embodiment, a current low-resolution spatial-element frame is displayed instead of the current high-resolution spatial-element frame in this case.

Alternatively, the steps shown in **Fig. 15** may be used to enhance conventional streaming methods.

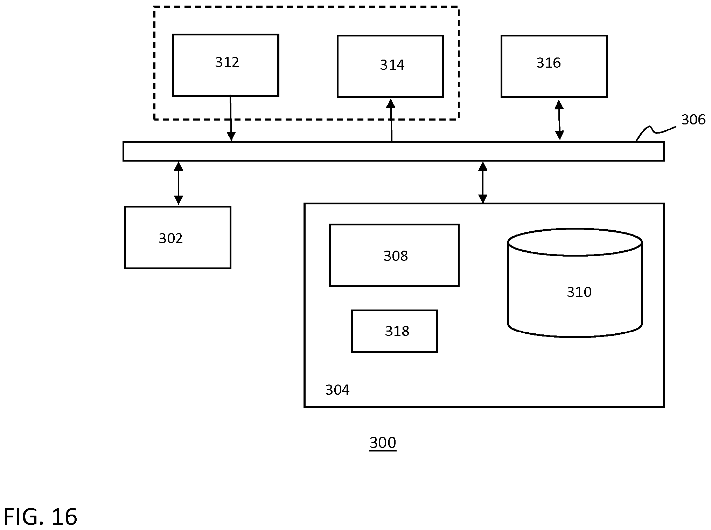

**Fig. 16** depicts a block diagram illustrating an exemplary data processing system that may perform the methods as described with reference to **Figs. 6-7** and **Figs.14-15****.**

As shown in **Fig. 16****,** the data processing system **300** may include at least one processor **302** coupled to memory elements **304** through a system bus **306.** As such, the data processing system may store program code within memory elements **304.** Further, the processor **302** may execute the program code accessed from the memory elements **304** via a system bus **306.** In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310.** The local memory may refer to random access memory or other non-persistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the number of times program code must be retrieved from the bulk storage device **310** during execution.

Input/output (I/O) devices depicted as an input device **312** and an output device **314** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 16** with a dashed line surrounding the input device **312** and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300,** and a data transmitter for transmitting data from the data processing system **300** to said systems, devices and/or networks. Modems, cable modems, and Ethernet cards are examples of different types of network adapter that may be used with the data processing system **300.**

As pictured in **Fig. 16****,** the memory elements **304** may store an application 318. In various embodiments, the application **318** may be stored in the local memory 308, he one or more bulk storage devices **310,** or separate from the local memory and the bulk storage devices. It should be appreciated that the data processing system **300** may further execute an operating system (not shown in **Fig. 14****)** that can facilitate execution of the application **318.** The application **318,** being implemented in the form of executable program code, can be executed by the data processing system **300,** e.g., by the processor **302.** Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **302** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention as defined by the appended set of claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of transmitting a request for video data, comprising:
- for each spatial element of a video in a user's field of view for which a client device does not possess a current high-resolution spatial-element frame, said client device transmitting (102) one or more requests for high-resolution spatial-element frames of said spatial element of said video to a distribution node, said video comprising a plurality of spatial elements and a plurality of spatial-element frames for each of said plurality of spatial elements, said plurality of spatial-element frames comprising both intra-coded spatial-element frames and inter-coded spatial-element frames, only said inter-coded spatial-element frames being encoded with reference to one or more other spatial-element frames of said plurality of spatial-element frames, said one or more requests identifying said spatial element; and
- for each of said spatial elements for which said one or more requests is transmitted, said client device receiving (103) data relating to said spatial element of said video from said distribution node in response to said one or more requests, said data comprising a temporal segment of high-resolution spatial-element frames, said high-resolution spatial-element frames of said temporal segment each comprising a plurality of video pixels,
**characterized in that** said one or more requests specify a starting point corresponding to a current time, said one or more requests are for data comprising a temporal segment of high-resolution spatial-element frames starting at said starting point, the first high-resolution spatial-element frame of said requested temporal segment of high-resolution spatial-element frames being intra coded, and said temporal segment of high-resolution spatial-element frames received by said client device starts at said starting point, the first one or more high-resolution spatial-element frames of said temporal segment of high-resolution spatial-element frames being intra coded.

2. A method as claimed in claim 1, wherein said starting point is specified as a position in a file (241) and said file (241) comprises two or more temporal segments (77, 157) of high-resolution spatial-element frames relating to at least partly overlapping time periods for a plurality of time periods, at least a first one (77) of said two or more temporal segments of high-resolution spatial-element frames comprising inter-coded spatial-element frames and at least a second one (157) of said two or more temporal segments of spatial-element frames comprising only intra-coded spatial-element frames, said two or more temporal segments (77, 157) being stored near each other in said file (241).

3. A method as claimed in claim 1 or 2, further comprising determining (141) said starting point by looking up a position in a file (151, 152) by using an index (161, 163) associated with said file (151, 152), said position corresponding to a current time and said index (161, 163) comprising a mapping from a point in time or a temporal index value to a position in said file.

4. A method as claimed in claim 3, wherein determining (141) said starting point comprises selecting (142) one index (163) from a plurality of indices (161, 163) associated with one or more files, said one or more files including said file, said plurality of indices (161, 163) each comprising a mapping from a point in time or a temporal index value to a position in said one or more files, and looking up (143) said position in said one or more files by using said selected index (163), said position corresponding to a position of an intra-coded spatial-element frame in said one or more files.

5. A method as claimed in claim 4, further comprising, for at least one of said spatial elements for which said one or more request is transmitted, said client device transmitting (104) one or more further requests for further high-resolution spatial-element frames of said spatial element of said video to said distribution node, said one or more further requests identifying said spatial element and specifying a further starting point corresponding to a current time, and determining (145) said further starting point by looking up (147) a position in a file by using another one (161) of said plurality of indices.

6. A method as claimed in any one of the preceding claims, further comprising:
- displaying (201) said received high-resolution spatial-element frames;
- pausing (203) display of said video upon receiving an instruction to pause display of said video;
- upon receiving said instruction, for each spatial element of said video outside said user's field of view for which a client device does not possess a current high-resolution spatial-element frame, said client device transmitting (205) one or more further requests for high-resolution spatial-element frames of said spatial element;
- receiving (207) further high-resolution spatial-element frames in response to said further requests; and
- displaying (209) at least one of said received further high-resolution spatial-element frames upon receiving an instruction to change said user's field of view while said display of said video is being paused.

7. A method as claimed in any one of the preceding claims, further comprising:
- for each spatial element of said video, said client device transmitting (221) one or more further requests for low-resolution spatial-element frames of said spatial element of said video;
- receiving (223) low-resolution spatial-element frames in response to said further requests;
- displaying (227) a current low-resolution spatial-element frame for each spatial element in said user's field of view for which said client device does not possess a current high-resolution spatial-element frame;
- displaying (228) a current high-resolution spatial-element frame for one or more spatial elements in said user's field of view for which said client device possesses said current high-resolution spatial-element frame; and
- displaying (229) a current low-resolution spatial-element frame for one or more further spatial elements in said user's field of view for which said client device possesses a current high-resolution spatial-element frame.

8. A computer program comprising instructions which, when the program is executed by a computer, cause the computer to carry out the method of any one of claims 1 to 7.

9. A client device (1), comprising:
at least one transmitter (3);
at least one receiver (3); and
at least one processor (5) configured to:
- for each spatial element of a video in a user's field of view for which said client device does not possess a current high-resolution spatial-element frame, use said at least one transmitter (3) to transmit one or more requests for high-resolution spatial-element frames of said spatial element of said video to a distribution node (13), said video comprising a plurality of spatial elements and a plurality of spatial-element frames for each of said plurality of spatial elements, said plurality of spatial-element frames comprising both intra-coded spatial-element frames and inter-coded spatial-element frames, only said inter-coded spatial-element frames being encoded with reference to one or more other spatial-element frames of said plurality of spatial-element frames, said one or more requests identifying said spatial element, and
- for each of said spatial elements for which said one or more requests is transmitted, use said at least one receiver (3) to receive data relating to said spatial element of said video from said distribution node (13) in response to said one or more requests, said data comprising a temporal segment of high-resolution spatial-element frames,
**characterized in that** said one or more requests specify a starting point corresponding to a current time, said one or more requests are for data comprising a temporal segment of high-resolution spatial-element frames starting at said starting point, the first high-resolution spatial-element frame of said requested temporal segment of high-resolution spatial-element frames being intra coded, and said received temporal segment of high-resolution spatial-element frames starts at said starting point, the first one or more high-resolution spatial-element frames of said temporal segment of high-resolution spatial-element frames being intra coded,
wherein said at least one processor (5) is configured to determine said starting point before transmitting said one or more requests by looking up a position in a file by using an index associated with said file, said position corresponding to a current time and said index comprising a mapping from a point in time or a temporal index value to a position in said file.

## Patentansprüche

1. Verfahren zur Übertragung einer Anforderung von Videodaten, das aufweist:
- für jedes Raumelement eines Videos im Blickfeld eines Benutzers, für das eine Client-Vorrichtung kein aktuelles Hochauflösungs-Raumelement-Einzelbild besitzt, Übertragen (102) einer oder mehrerer Anforderungen nach Hochauflösungs-Raumelement-Einzelbildem des Raumelements des Videos durch die Client-Vorrichtung an einen Verteilungsknoten, wobei das Video mehrere Raumelemente und mehrere Raumelement-Einzelbilder für jedes der mehreren Raumelemente aufweist, wobei die mehreren Raumelement-Einzelbilder sowohl intrakodierte Raumelement-Einzelbilder als auch interkodierte Raumelement-Einzelbilder aufweisen, wobei nur die interkodierten Raumelement-Einzelbilder unter Bezug auf ein oder mehrere andere Raumelement-Einzelbilder der mehreren Raumelement-Einzelbilder kodiert werden, wobei die eine oder mehreren Anforderungen das Raumelement identifizieren; und
- für jedes der Raumelemente, für das die eine oder mehreren Anforderungen übertragen werden, ansprechend auf die eine oder mehreren Anforderungen Empfangen (103) von Daten, die das Raumelement des Videos betreffen, durch die Client-Vorrichtung von dem Verteilungsknoten, wobei die Daten ein Zeitsegment von Hochauflösungs-Raumelement-Einzelbildern aufweisen, wobei die Hochauflösungs-Raumelement-Einzelbilder des Zeitsegments jeweils mehrere Videobildpunkte aufweisen,
**dadurch gekennzeichnet, dass** die eine oder mehreren Anforderungen einen Startpunkt, der einer aktuellen Zeit entspricht, spezifizieren, wobei die eine oder mehreren Anforderungen für Daten sind, die ein Zeitsegment von Hochauflösungs-Raumelement-Einzelbildem aufweisen, die an dem Startpunkt beginnen, wobei das erste Hochauflösungs-Raumelement-Einzelbild des angeforderten Zeitsegments der Hochauflösungs-Raumelement-Einzelbilder intrakodiert wird, und das Zeitsegment der Hochauflösungs-Raumelement-Einzelbilder, das von der Client-Vorrichtung empfangen wird, an dem Startpunkt beginnt, wobei das erste oder mehrere Hochauflösungs-Raumelement-Einzelbilder des Zeitsegments der Hochauflösungs-Raumelement-Einzelbilder intrakodiert werden.

2. Verfahren nach Anspruch 1, wobei der Startpunkt als eine Position in einer Datei (241) spezifiziert wird und die Datei (241) zwei oder mehr Zeitsegmente (77, 157) von Hochauflösungs-Raumelement-Einzelbildern aufweist, welche wenigstens teilweise überlappende Zeitspannen für mehrere Zeitspannen betreffen, wobei wenigstens ein erstes (77) der zwei oder mehr Zeitsegmente der Hochauflösungs-Raumelement-Einzelbilder interkodierte Raumelement-Einzelbilder aufweist und wenigstens ein zweites (157) der zwei oder mehr Zeitsegmente der Raumelement-Einzelbilder nur intrakodierte Raumelement-Einzelbilder aufweist, wobei die zwei oder mehr Zeitsegmente (77, 157) nahe beieinander in der Datei (241) gespeichert werden.

3. Verfahren nach Anspruch 1 oder 2, das ferner das Bestimmen (141) des Startpunkts durch Nachschlagen einer Position in einer Datei (151, 152) unter Verwendung eines mit der Datei (151, 152) assoziierten Verzeichnisses (161, 163) aufweist, wobei die Position einer aktuellen Zeit entspricht und das Verzeichnis (161, 163) eine Abbildung von einem Zeitpunkt oder einem zeitlichen Verzeichniswert zu einer Position in der Datei aufweist.

4. Verfahren nach Anspruch 3, wobei das Bestimmen (141) des Startpunkts das Auswählen (142) eines Verzeichnisses (163) aus mehreren Verzeichnissen (161, 163), die mit einer oder mehreren Dateien assoziiert sind, aufweist, wobei die eine oder mehreren Dateien die Datei umfassen, wobei die mehreren Verzeichnisse (161, 163) jeweils eine Abbildung von einem Zeitpunkt oder einem zeitlichen Verzeichniswert auf eine Position in der einen oder den mehreren Dateien und das Nachschlagen (143) der Position in der einen oder den mehreren Dateien unter Verwendung des ausgewählten Verzeichnisses (163) aufweisen, wobei die Position einer Position eines intrakodierten Raumelement-Einzelbilds in der einen oder den mehreren Dateien entspricht.

5. Verfahren nach Anspruch 4, das ferner für wenigstens eines der Raumelemente, für das die eine oder mehrere Anforderungen übertragen wird, aufweist, dass die Client-Vorrichtung eine oder mehrere weitere Anforderungen nach weiteren Hochauflösungs-Raumelement-Einzelbilden des Raumelements des Videos an den Verteilungsknoten überträgt (104), wobei die eine oder mehreren weiteren Anforderungen das Raumelement identifizieren und einen weiteren Startpunkt, der einer aktuellen Zeit entspricht, spezifizieren, und den weiteren Startpunkt durch Nachschlagen (147) einer Position in einer Datei unter Verwendung eines anderen (161) der mehreren Verzeichnisse bestimmen (145).

6. Verfahren nach einem der vorhergehenden Ansprüche, das ferner aufweist:
- Anzeigen (201) der empfangenen Hochauflösungs-Raumelement-Einzelbilder;
- Aussetzen (203) der Anzeige des Videos nach Empfang einer Anweisung, das Video auszusetzen;
- nach dem Empfang der Anweisung für jedes Raumelement des Videos außerhalb des Blickfelds des Benutzers, für das eine Client-Vorrichtung kein aktuelles Hochauflösungs-Raumelement-Einzelbild besitzt, Übertragen (205) einer oder mehrerer weiterer Anforderungen nach Hochauflösungs-Raumelement-Einzelbildern des Raumelements durch die Client-Vorrichtung;
- Empfangen (207) weiterer Hochauflösungs-Raumelement-Einzelbilder ansprechend auf die weiteren Anforderungen; und
- Anzeigen (209) wenigstens eines der empfangenen weiteren Hochauflösungs-Raumelement-Einzelbilder nach dem Empfang einer Anweisung, das Blickfeld des Benutzers zu ändern, während die Anzeige des Videos ausgesetzt wird.

7. Verfahren nach einem der vorhergehenden Ansprüche, das ferner aufweist:
- für jedes Raumelement des Videos Übertragen (221) einer oder mehrerer Anforderungen nach Niederauflösungs-Raumelement-Einzelbildern des Raumelements des Videos durch die Client-Vorrichtung;
- ansprechend auf die weiteren Anforderungen Empfangen (223) von Niederauflösungs-Raumelement-Einzelbildern;
- Anzeigen (227) eines aktuellen Niederauflösungs-Raumelement-Einzelbilds für jedes Raumelement in dem Blickfeld des Benutzers, für das die Client-Vorrichtung kein aktuelles Hochauflösungs-Raumelement-Einzelbild besitzt;
- Anzeigen (228) eines aktuellen Hochauflösungs-Raumelement-Einzelbilds für ein oder mehrere Raumelemente in dem Blickfeld des Benutzers, für das die Client-Vorrichtung das aktuelle Hochauflösungs-Raumelement-Einzelbild besitzt; und
- Anzeigen (229) eines aktuellen Niederauflösungs-Raumelement-Einzelbilds für ein oder mehrere Raumelemente in dem Blickfeld des Benutzers, für welches die Client-Vorrichtung ein aktuelles Hochauflösungs-Raumelement-Einzelbild besitzt.

8. Computerprogramm, das Anweisungen aufweist, die, wenn das Programm von einem Computer ausgeführt wird, bewirken, dass der Computer das Verfahren nach einem der Ansprüche 1 bis 7 ausführt.

9. Client-Vorrichtung (1), die aufweist:
wenigstens einen Sender (3);
wenigstens einen Empfänger (3); und
wenigstens einen Prozessor (5), der konfiguriert ist, um:
- für jedes Raumelement eines Videos im Blickfeld eines Benutzers, für das die Client-Vorrichtung kein aktuelles Hochauflösungs-Raumelement-Einzelbild besitzt, den wenigstens einen Sender (3) zu verwenden, um eine oder mehrere Anforderungen nach Hochauflösungs-Raumelement-Einzelbildern des Raumelements des Videos an einen Verteilungsknoten (13) zu übertragen, wobei das Video mehrere Raumelemente und mehrere Raumelement-Einzelbilder für jedes der mehreren Raumelemente aufweist, wobei die mehreren Raumelement-Einzelbilder sowohl intrakodierte Raumelement-Einzelbilder als auch interkodierte Raumelement-Einzelbilder aufweisen, wobei nur die interkodierten Raumelement-Einzelbilder unter Bezug auf ein oder mehrere andere Raumelement-Einzelbilder der mehreren Raumelement-Einzelbilder kodiert werden, wobei die eine oder mehreren Anforderungen das Raumelement identifizieren; und
- für jedes der Raumelemente, für das die eine oder mehreren Anforderungen übertragen werden, den wenigstens einen Empfänger (3) zu verwenden, um ansprechend auf die eine oder mehreren Anforderungen Daten, die das Raumelement des Videos betreffen, von dem Verteilungsknoten (13) zu empfangen, wobei die Daten ein Zeitsegment von Hochauflösungs-Raumelement-Einzelbildern aufweisen,
**dadurch gekennzeichnet, dass** die eine oder mehreren Anforderungen einen Startpunkt, der einer aktuellen Zeit entspricht, spezifizieren, wobei die eine oder mehreren Anforderungen für Daten sind, die ein Zeitsegment von Hochauflösungs-Raumelement-Einzelbildem aufweisen, die an dem Startpunkt beginnen, wobei das erste Hochauflösungs-Raumelement-Einzelbild des angeforderten Zeitsegments der Hochauflösungs-Raumelement-Einzelbilder intrakodiert wird, und das empfangene Zeitsegment der Hochauflösungs-Raumelement-Einzelbilder an dem Startpunkt beginnt, wobei das erste oder mehrere Hochauflösungs-Raumelement-Einzelbilder des Zeitsegments der Hochauflösungs-Raumelement-Einzelbilder intrakodiert werden,
wobei der wenigstens eine Prozessor (5) konfiguriert ist, um den Startpunkt vor dem Übertragen der einen oder mehreren Anforderungen durch Nachschlagen einer Position in einer Datei unter Verwendung eines mit der Datei assoziierten Verzeichnisses zu bestimmen, wobei die Position einer aktuellen Zeit entspricht und das Verzeichnis eine Abbildung von einem Zeitpunkt oder einem zeitlichen Verzeichniswert auf eine Position in der Datei aufweist.

## Revendications

1. Procédé de transmission d'une demande de données vidéo, comprenant :
- pour chaque élément spatial d'une vidéo dans un champ visuel d'un utilisateur pour lequel un dispositif client ne possède pas de trame d'élément spatial haute résolution actuelle, la transmission (102) par ledit dispositif client d'une ou plusieurs demandes de trames d'élément spatial haute résolution dudit élément spatial de ladite vidéo à un nœud de distribution, ladite vidéo comprenant une pluralité d'éléments spatiaux et une pluralité de trames d'élément spatial pour chacun de ladite pluralité d'éléments spatiaux, ladite pluralité de trames d'élément spatial comprenant à la fois des trames d'élément spatial à codage intra et des trames d'élément spatial à codage inter, seules lesdites trames d'élément spatial à codage inter étant codées en référence à une ou plusieurs des autres trames d'élément spatial de ladite pluralité de trames d'élément spatial, lesdites une ou plusieurs demandes identifiant ledit élément spatial ; et
- pour chacun desdits éléments spatiaux pour lesquels lesdites une ou plusieurs demandes sont transmises, la réception par ledit dispositif client (103) de données relatives audit élément spatial de ladite vidéo en provenance dudit nœud de distribution en réponse auxdites une ou plusieurs demandes, lesdites données comprenant un segment temporel de trames d'élément spatial haute résolution, lesdites trames d'élément spatial haute résolution dudit segment temporel comprenant chacune une pluralité de pixels vidéo,
**caractérisé en ce que** lesdites une ou plusieurs demandes précisent un point de départ correspondant à une heure actuelle, lesdites une ou plusieurs demandes sont pour des données comprenant un segment temporel de trames d'élément spatial haute résolution commençant audit point de départ, la première trame d'élément spatial haute résolution dudit segment temporel demandé de trames d'élément spatial haute résolution étant à codage intra, et ledit segment temporel de trames d'élément spatial haute résolution reçu par ledit dispositif client démarre audit point de départ, les premières une ou plusieurs trames d'élément spatial haute résolution dudit segment temporel de trames d'élément spatial haute résolution étant à codage intra.

2. Procédé selon la revendication 1, dans lequel ledit point de départ est précisé en tant que position dans un fichier (241) et ledit fichier (241) comprend deux ou plus de deux segments temporels (77, 157) de trames d'élément spatial haute résolution relatives à des périodes de temps se chevauchant au moins partiellement pendant une pluralité de périodes de temps, au moins un premier (77) desdits deux ou plus de deux segments temporels de trames d'élément spatial haute résolution comprenant des trames d'élément spatial à codage inter et au moins un second (157) desdits deux ou plus de deux segments temporels de trames d'élément spatial comprenant des trames d'élément spatial à codage intra uniquement, lesdits deux ou plus de deux segments temporels (77, 157) étant stockés près l'un de l'autre dans ledit fichier (241).

3. Procédé selon la revendication 1 ou 2, comprenant en outre la détermination (141) dudit point de départ en cherchant une position dans un fichier (151, 152) en utilisant un index (161, 163) associé audit fichier (151, 152), ladite position correspondant à une heure actuelle et ledit index (161, 163) comprenant un mappage à partir d'un point dans le temps ou d'une valeur d'index temporel vers une position dans ledit fichier.

4. Procédé selon la revendication 3, dans lequel la détermination (141) dudit point de départ comprend la sélection (142) d'un index (163) à partir d'une pluralité d'index (161, 163) associés à un ou plusieurs fichiers, lesdits un ou plusieurs fichiers incluant ledit fichier, ladite pluralité d'index (161, 163) comprenant chacun un mappage à partir d'un point dans le temps ou d'une valeur d'index temporel vers une position dans lesdits un ou plusieurs fichiers, et la recherche (143) de ladite position dans lesdits un ou plusieurs fichiers en utilisant ledit index (163) sélectionné, ladite position correspondant à une position d'une trame d'élément spatial à codage intra dans lesdits un ou plusieurs fichiers.

5. Procédé selon la revendication 4, comprenant en outre, pour au moins l'un desdits éléments spatiaux pour lesquels lesdites une ou plusieurs demandes sont transmises, la transmission (104) par ledit dispositif client d'une ou plusieurs demandes supplémentaires de trames d'élément spatial haute résolution dudit élément spatial de ladite vidéo audit nœud de distribution, lesdites une ou plusieurs demandes supplémentaires identifiant ledit élément spatial et précisant un point de départ supplémentaire correspondant à une heure actuelle, et la détermination (145) dudit point de départ supplémentaire en recherchant (147) une position dans un fichier en utilisant un autre (161) de ladite pluralité d'index.

6. Procédé selon l'une quelconque des revendications précédentes, comprenant en outre :
- l'affichage (201) desdites trames d'élément spatial haute résolution reçues ;
- la mise en pause (203) de l'affichage de ladite vidéo au moment de la réception d'une instruction de mise en pause de l'affichage de ladite vidéo ;
- au moment de la réception de ladite instruction, pour chaque élément spatial de ladite vidéo à l'extérieur dudit champ visuel de l'utilisateur pour lequel un dispositif client ne possède pas de trame d'élément spatial haute résolution actuelle, la transmission (205) par ledit dispositif client d'une ou plusieurs demandes supplémentaires de trames d'élément spatial haute résolution dudit élément spatial ;
- la réception (207) de trames d'élément spatial haute résolution supplémentaires en réponse auxdites demandes supplémentaires ; et
- l'affichage (209) d'au moins l'une desdites trames d'élément spatial haute résolution supplémentaires au moment de la réception d'une instruction de changement dudit champ visuel de l'utilisateur tandis que ledit affichage de ladite vidéo est mis en pause.

7. Procédé selon l'une quelconque des revendications précédentes, comprenant en outre :
- pour chaque élément spatial de ladite vidéo, la transmission (221) par ledit dispositif client d'une ou plusieurs demandes supplémentaires de trames d'élément spatial basse résolution dudit élément spatial de ladite vidéo ;
- la réception (223) de trames d'élément spatial basse résolution en réponse auxdites demandes supplémentaires ;
- l'affichage (227) d'une trame d'élément spatial basse résolution actuelle pour chaque élément spatial dans ledit champ visuel de l'utilisateur pour lequel ledit dispositif client ne possède pas de trame d'élément spatial haute résolution actuelle ;
- l'affichage (228) d'une trame d'élément spatial haute résolution actuelle pour un ou plusieurs éléments spatiaux dans ledit champ visuel de l'utilisateur pour lequel ledit dispositif client possède ladite trame d'élément spatial haute résolution actuelle ; et
- l'affichage (229) d'une trame d'élément spatial basse résolution actuelle pour un ou plusieurs éléments spatiaux supplémentaires dans ledit champ visuel de l'utilisateur pour lequel ledit dispositif client possède une trame d'élément spatial haute résolution actuelle.

8. Programme informatique comprenant des instructions qui, lorsque le programme est exécuté par un ordinateur, amènent l'ordinateur à réaliser le procédé selon l'une quelconque des revendications 1 à 7.

9. Dispositif client (1), comprenant :
au moins un transmetteur (3) ;
au moins un récepteur (3) ; et
au moins un processeur (5) configuré pour :
- pour chaque élément spatial d'une vidéo dans un champ visuel de l'utilisateur pour lequel ledit dispositif client ne possède pas de trame d'élément spatial haute résolution actuelle, utiliser ledit au moins un transmetteur (3) pour transmettre une ou plusieurs demandes de trames d'élément spatial haute résolution dudit élément spatial de ladite vidéo à un nœud de distribution (13), ladite vidéo comprenant une pluralité d'éléments spatiaux et une pluralité de trames d'élément spatial pour chacun de ladite pluralité d'éléments spatiaux, ladite pluralité de trames d'élément spatial comprenant à la fois des trames d'élément spatial à codage intra et des trames d'élément spatial à codage inter, seules lesdites trames d'élément spatial à codage inter étant codées en référence à une ou plusieurs autres trames d'élément spatial de ladite pluralité de trames d'élément spatial, lesdites une ou plusieurs demandes identifiant ledit élément spatial, et
- pour chacun desdits éléments spatiaux pour lesquels lesdites une ou plusieurs demandes sont transmises, utiliser ledit au moins un récepteur (3) pour recevoir des données relatives audit élément spatial de ladite vidéo en provenance dudit nœud de distribution (13) en réponse auxdites une ou plusieurs demandes, lesdites données comprenant un segment temporel de trames d'élément spatial haute résolution,
**caractérisé en ce que** lesdites une ou plusieurs demandes précisent un point de départ correspondant à une heure actuelle, lesdites une ou plusieurs demandes sont pour des données comprenant un segment temporel de trames d'élément spatial haute résolution commençant audit point de départ, la première trame d'élément spatial haute résolution dudit segment temporel demandé de trames d'élément spatial haute résolution étant à codage intra, et ledit segment temporel reçu de trames d'élément spatial haute résolution démarre audit point de départ, les premières une ou plusieurs trames d'élément spatial haute résolution dudit segment temporel de trames d'élément spatial haute résolution étant à codage intra,
dans lequel ledit au moins un processeur (5) est configuré pour déterminer ledit point de départ avant de transmettre lesdites une ou plusieurs demandes en cherchant une position dans un fichier en utilisant un index associé audit fichier, ladite position correspondant à une heure actuelle et ledit indice comprenant un mappage à partir d'un point dans le temps ou d'une valeur d'index temporel vers une position dans ledit fichier.
